(19) Europäisches Patentamt / European Patent Office / Office européen des brevets

(11) **EP 1 845 137 B1**

(12) **EUROPÄISCHE PATENTSCHRIFT**

(45) Veröffentlichungstag und Bekanntmachung des Hinweises auf die Patenterteilung:
**01.08.2018   Patentblatt 2018/31**

(21) Anmeldenummer: **07006342.5**

(22) Anmeldetag: **28.03.2007**

(51) Int Cl.:

| | |
|---|---|
| *C09C 3/04* (2006.01) | *C04B 20/12* (2006.01) |
| *C09C 1/04* (2006.01) | *C09C 1/34* (2006.01) |
| *C09C 1/36* (2006.01) | *C09C 1/56* (2006.01) |
| *C09C 1/58* (2006.01) | *C09C 3/00* (2006.01) |
| *C09C 3/06* (2006.01) | *C09C 3/08* (2006.01) |
| *C09C 1/24* (2006.01) | *C04B 18/02* (2006.01) |
| *C09D 17/00* (2006.01) | *C08K 5/00* (2006.01) |
| *C08L 95/00* (2006.01) | *C09D 7/41* (2018.01) |
| *C09D 7/62* (2018.01) | *C04B 20/10* (2006.01) |
| *C08K 3/22* (2006.01) | *C09D 7/40* (2018.01) |

(54) **Verfahren zur Herstellung von Pigmentgranulaten und deren Verwendung**

Method for manufacturing pigment pellets and their application

Procédé de fabrication de pigments granulés et leur utilisation

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **10.04.2006   DE 102006017109**

(43) Veröffentlichungstag der Anmeldung:
**17.10.2007   Patentblatt 2007/42**

(73) Patentinhaber: **LANXESS Deutschland GmbH 50569 Köln (DE)**

(72) Erfinder:
- **Friedrich, Holger, Dr.**
  **47798 Krefeld (DE)**
- **Bütje, Kai, Dr.**
  **47229 Duisburg (DE)**
- **Holtmann, Udo, Dr.**
  **51069 Köln (DE)**

(56) Entgegenhaltungen:
**EP-A1- 1 074 599     DE-C1- 4 336 613**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft Pigmentgranulate sowie ein Verfahren zu deren Herstellung und ihre Verwendung.

Die Verarbeitung von Pigmentgranulaten verlangt zur Erzielung des optimalen Farbeindrucks ein Aufmahlen der Pigmente zu Primärteilchen. Die dadurch entstehenden Pulver stauben sehr stark und neigen aufgrund ihrer Feinteiligkeit zu Adhäsion und kleben in Dosieranlagen. Bei toxikologisch gefährlichen Stoffen müssen deshalb bei der Verarbeitung Maßnahmen zur Vermeidung einer Gefährdung von Mensch und Umwelt durch entstehende Stäube getroffen werden. Aber auch bei unbedenklichen inerten Stoffen wie zum Beispiel Eisenoxidpigmenten ist eine Vermeidung von Staubbelästigung zunehmend vom Markt gewünscht.

Staubvermeidung und verbesserte Dosierung aufgrund guter Fließeigenschaften zur Erzielung eines qualitativ gleichmäßigen Farbeindrucks bei der Anwendung in Baustoffen und organischen Medien ist deshalb das Ziel im Umgang mit Pigmenten. Dieses Ziel wird mehr oder weniger durch Anwendung von Granulationsverfahren auf Pigmente erreicht. Dabei werden beispielsweise Aufbau- oder Sprühgranulation angewendet. In den letzten Jahren haben sich aber auch zunehmend Brikettier- und Pressgranulate auf dem Markt durchsetzen können. Diese Granulate haben zwischenzeitlich großen kommerziellen Erfolg.

Grundsätzlich werden bei Pigmenten vom Markt zwei sich in der Richtung gegensätzliche Eigenschaften beim Einsatz von Pigmentgranulaten gefordert: mechanische Stabilität des Granulats und gute Dispergiereigenschaften im eingesetzten Medium. Die mechanische Stabilität ist verantwortlich für gute Transporteigenschaften sowohl beim Transport zwischen Hersteller und Anwender als auch für gute Dosierung und Fließeigenschaften beim Einsatz der Pigmente. Sie wird durch hohe Haftkräfte bewirkt und hängt zum Beispiel von Bindemittelmenge oder auch vom Pressdruck beim Verformen ab. Andererseits wird die Dispergierbarkeit durch eine gute Mahlung vor der Granulierung (Nass- und Trockenmahlung), durch die mechanische Energie bei der Einarbeitung (Scherkräfte) und durch Dispergierhilfsmittel, die die Haftkräfte im trockenen Granulat bei der Einarbeitung in ein Medium sofort herabsetzen, beeinflußt. Allerdings ist bei Pigmenten die Anwendung von größeren Mengen Dispergierhilfsmittel wegen des Kostenverhältnisses Hilfsmittel/Pigment eingeschränkt. Außerdem bewirkt ein hoher Hilfsmittelanteil eine entsprechende Herabsetzung der Farbstärke beziehungsweise des Streuvermögens. Da die Farbstärkeschwankungen beispielsweise beim Einfärben von Baustoffen im allgemeinen unter $\pm 5$ % liegen, ist auch der Einsatz von Zusatzstoffen begrenzt, selbst wenn diese gleichzeitig als Haftvermittler und Dispergierhilfsmittel wirken. Auch dürfen die Zusätze nicht die Gebrauchseigenschaften der Endprodukte, wie zum Beispiel Baustoffe, Kunststoffe und Lacke nachteilig verändern, beispielsweise bei Beton die Druckfestigkeit oder das Erstarrungsverhalten, bei Asphalt die Druckfestigkeit oder Abriebfestigkeit und bei Kunststoffen die Festigkeit oder die Kerbschlagzähigkeit, bei Elastomeren (Polymeren) die elastischen Eigenschaften und bei Farben und Lacken die rheologischen Eigenschaften.

Nach dem Stand der Technik kommen als Herstellungsverfahren für Pigmentgranulate zum Beispiel Sprühgranulation (Sprühtrocknung über Scheibe oder Düse) im Gleich- oder Gegenstromverfahren und Aufbaugranulation (Mischer, Wirbelschichtgranulator, Teller beziehungsweise Trommel) oder Kompaktierverfahren in Frage.

Die Sprühtrocknungs-Granulation geht von Pigmentsuspensionen unter Verwendung von Bindemitteln aus. Entsprechende Verfahren sind in verschiedenen Schutzrechten beschrieben. Dabei werden überwiegend wasserlösliche Bindemittel verwendet. So wird in DE 3 619 363 A1, EP 0 268 645 A1 und EP 0 365 046 A1 von organischen Substanzen wie zum Beispiel Ligninsulfonaten, Formaldehydkondensaten, Gluconsäuren, sulfatierten Polyglykolethern ausgegangen, während gemäß DE 3 918 694 A1 und US 5,215,583 A1 von anorganischen Salzen wie zum Beispiel Silikat und Phosphat ausgegangen wird. Auch eine Kombination von Sprüh- und Aufbaugranulation ist in EP 0 507 046 A1 beschrieben worden. In DE 3 619 363 A1 und EP 0 268 645 A1 wird die Anwendung eines Kompaktierverfahrens ausgenommen.

In EP 0 257 423 A1 und DE 3 841 848 A1 wird die Sprühgranulation unter Verwendung von Polyorganosiloxanen als hydrophoben, lipophilen Zusatzstoffen beschrieben. Der erwähnte Zerstäubungstrockner führt im allgemeinen zu kleinen Teilchengrößen und hohem Feinanteil. Das bedeutet, dass ein wesentlicher Anteil des Materials aus dem Trockner nicht als direkt einsetzbares Granulat erhalten wird, sondern als Feinanteil erst im Filter zurückgehalten wird und dann in den Prozeß zurückgeführt werden muß. Die hydrophobierende Nachbehandlung führt bei sprühgranulierten Produkten zu einem sehr gut fließenden, aber außerordentlich stark staubenden Granulat.

EP 0 424 896 A1 offenbart die Herstellung von staubarmen Feingranulaten in einem Herstellungsgang in bekannten Intensivmischern. Es wird hierbei ein niedriger Gehalt an Wachsen in Kombination mit Emulgator und Netzmitteln durch Aufbringen einer wäßrigen Dispersion angewendet. Dabei werden im allgemeinen Wassergehalte von 20 bis über 50 % erhalten. Diese Granulate müssen zunächst getrocknet und von Über- und Unterkorn getrennt werden.

DE 31 32 303 A1 beschreibt staubarme, fließfähige anorganische Pigmentgranulate, die mit unter Wärmeeinwirkung (40 bis 60 °C) flüssig werdenden Bindemitteln gemischt und durch einen Siebvorgang unter Anwendung von Siebhilfe (Druck) granuliert werden. Dabei fällt circa 10 bis 20 % des Durchsatzes als Feinanteil < 0,1 mm an.

Aus EP 0 144 940 A1 gehen staubarme Pigmentgranulate hervor, die ausgehend von Filterschlamm mit circa

**EP 1 845 137 B1**

50 % Wasser durch Zugabe von 0,5-10 % oberflächenaktiven Stoffen und zusätzlich Mineralöl oder flüssig werdenden Wachsen bei 50 bis 200 °C gemischt werden bis zum Schmierpunkt. Der Vorgang erfolgt in Intensivmischern, eventuell wird noch nachgranuliert und nachgetrocknet. Im Endprodukt liegt Wasser in einer Menge von 10 bis 15 % vor, was für die Einarbeitung in Kunststoffen nachteilig ist.

Auch andere Verfahren sind in ihrer Anwendung eingeschränkt. Die Sprühgranulation erfordert wegen der Tropfenbildung die Verwendung von gut fließfähigen, also dünnflüssigen Suspensionen. Für den Trocknungsvorgang ist somit eine größere Menge an Wasser zu verdampfen als bei der häufig einsetzbaren Wirbelschichttrocknung aus hochausgepressten Pigmentfilterpasten. Dies führt zu höheren Energiekosten. Bei zuvor durch Kalzination hergestellten Pigmenten bedeutet die Sprühgranulation einen zusätzlichen Verfahrensschritt mit hohen Energiekosten. Außerdem fällt bei der Sprühgranulation ein mehr oder weniger großer Anteil an Feinmaterial im Staubfilter an, der wieder in die Produktion zurückgeführt werden muß.

In DE 28 44 710 A1 wird die Granulation von Pigmenten im Fließbett mit Granulierhilfsmitteln beschrieben, wobei trockenes Pigmentpulver mit Wasser besprüht wird.

Die Aufbaugranulation weist häufig auch Nachteile auf. Sie kann - ausgehend von Pigmentpulver - in Mischern unter hoher Turbulenz, im Wirbelschichtverfahren oder auch durch Teller- und Trommelgranulation durchgeführt werden. Allen diesen Verfahren ist gemeinsam, dass der Bindemittelbedarf, meistens Wasser, groß ist, so dass als zusätzlicher Verfahrensschritt eine Trocknung nachfolgen muß. Auch werden hierbei Granulate unterschiedlicher Größe erhalten, insbesondere, wenn nicht ausreichend Bindemittel für die Pulvermenge zur Verfügung steht oder die aktuelle Verteilung nicht optimal ist. Dann kann ein gewisser Anteil als Granulat zu groß werden, während andererseits zu kleine und damit noch staubende Anteile vorliegen. Deshalb ist eine Klassierung der entstehenden Granulate mit einem Rücklauf von Über- und Unterkorn erforderlich.

Die Tellergranulation führt zu einem breiten Teilchengrößenspektrum von Granulaten. Wo dies wegen der schlechten Dispergierbarkeit zu großer Teilchen nicht erwünscht ist, muß durch intensive personelle Überwachung der Granuliervorgang verfolgt werden und durch manuelle Steuerung der Keimmenge die Granulatherstellung optimiert werden. Üblicherweise erfolgt auch hierbei eine Klassierung mit Rückführung des Über- und Unterkorns.

Aus DE 42 14 195 A1 ist ein Verfahren zur Einfärbung von Asphalt mit anorganischen Pigmentgranulaten bekannt, bei dem Öle als Bindemittel verwendet werden. Es handelt sich hierbei um ein einfaches Granulationsverfahren.

In DE 196 38 042 A1 und DE 196 49 756 A1 werden anorganische Pigmentgranulate aus Trockenpigmenten, zum Beispiel Fertiggut, durch Abmischung mit einem oder mehreren Hilfsmitteln, Kompaktierung und weiteren Folgeschritten wie Zerkleinern, Sieben und Rückführen von Grob- und/oder Feingut beschrieben. Bei dem Kompaktierschritt wird mit Linienkräften von 0,1 bis 50 kN/cm kompaktiert. Die erhaltenen Granulate können mit einer zusätzlichen Schicht umhüllt werden, die zur Erhöhung der Stabilität beziehungsweise als Hilfe bei der Verarbeitung dient.

In EP 1074599 A1 werden Pigmentgranulate bestehend aus einem Kern und mindestens einer granulierten äusseren Schicht beschrieben, wobei der Kern aus einem anorganischen Pigment (Calcium Carbonat) und/oder einem organischen Farbstoff und die äussere Schicht aus einem organischen oder anorganischen floureszierendem Farbstoff besteht. EP 1074599 A1 offenbart für die äussere Schicht jedoch keine organischen Pigmente der Gruppe der Azo-, Chinacridon-, Phthalocyanin- und Perylen-Pigmente und Indigoide oder anorganische Pigmente der Gruppe Eisenoxide oder Chromoxide.

In DE 4 336 613 A1 und DE 4 336 612 A1 werden anorganische Pigmentgranulate aus Trockenpigmenten, zum Beispiel Fertiggut, durch Abmischung mit Bindemitteln, Kompaktierung und weiteren Folgeschritten wie Schrotung auf einem Siebgranulator und einer anschließenden Aufbaugranulation auf einem Drehteller oder in einer Drehtrommel beschrieben. Bei dem Kompaktierschritt wird mit Linienkräften von 0,1 bis 15 kN/cm kompaktiert.

Die gemäß der Lehre von DE 196 38 042 A1, DE 196 49 756 A1, DE 4 336 613 A1 und DE 4336612 A1 hergestellten Granulate enthalten nur das oder die Hilfsmittel, die im ersten Verfahrensschritt dem Pigmentpulver zugesetzt wurden. Selbst wenn die Granulatteilchen mit einer zusätzlichen Schicht umhüllt werden, enthalten sie in ihrem Innern lediglich das oder die Hilfsmittel, die im ersten Verfahrensschritt dem Pigmentpulver zugesetzt wurden. Die Granulatteilchen sind in ihrem Innern aus einer homogenen Mischung von Pigment und Hilfsmittel) aufgebaut. Es ist jedoch bekannt, dass Hilfsmittel, die im einen Anwendungsmedium zu sehr guter Dispergierbarkeit oder einer Verbesserung der Produkteigenschaften führen, in einem anderen Anwendungsmedium weit weniger wirksam sein können, unter Umständen kann sogar eine Unverträglichkeit beobachtet werden. So können beispielsweise stark hydrophobe Hilfsmittel bei der Einarbeitung in Kunststoffe oder Asphalt vorteilhaft sein, während sie bei der Einarbeitung in wässrige Dispersionsfarben oder bei der Herstellung von wässrigen Slurries zu Schwierigkeiten führen, da die Granulate von Wasser nur sehr schlecht benetzt werden. Aus diesem Grunde sind die nach der Lehre von DE 19 649 756 A1, DE 4 336 613 A1 und DE 4 336 612 A1 hergestellten Granulate, nicht gleichzeitig gleich gut für alle Anwendungsmedien geeignet. Bei der Herstellung müssten also mehrere Hilfsmittel zugesetzt werden, die in sämtlichen Anwendungsmedien eine möglichst gute Verarbeitbarkeit erlauben. Dies ist aus wirtschaftlicher Sicht wenig sinnvoll, außerdem kann es durch die Vielzahl der verschiedenen Additive zu gegenseitigen Unverträglichkeiten kommen. Wenn Granulate aus Pigmentmischungen gemäß der Lehre von DE 19 649 756 A1, DE 4 336 613 A1 oder DE 4 336 612 A1 hergestellt werden, zeigt sich ein weiterer Nachteil dieser Granulationsverfahren. Es muß zunächst eine Mischung der verschiedenen Pigmente hergestellt werden, die dann mit Bindemitteln und anderen Hilfsmitteln abgemischt und weiter verarbeitet wird.

Aufgabe der vorliegenden Erfindung war es daher, ein Verfahren zur Verfügung zu stellen, das die bisher beschriebenen Nachteile der Kompaktiergranulation in ihrer Anwendung auf anorganische oder organische Pigmente vermeidet und ausreichend stabile, dosierfähige, staubarme Granulate von guter Dispergierbarkeit in unterschiedlichen Anwendungsmedien zur Verfügung stellt.

Diese Aufgabe wurde gelöst durch Pigmentgranulate zur Einfärbung von Baustoffen die aus einem gepressten oder brikettierten Kern und mindestens einer aufgranulierten äußeren Schicht bestehen, wobei

a) der Kern mindestens ein organisches Pigment ausgewählt aus der Gruppe der Azo-, Chinacridon-, Phthalocyanin- und Perylen-Pigmente und Indigoide oder mindestens ein anorganisches Pigment ausgewählt aus der Gruppe Eisenoxide oder Chromoxide oder Mischungen davon enthält sowie mindestens ein Hilfsmittel und

b) die aufgranulierte äußere Schicht beziehungsweise die aufgranulierten äußeren Schichten mindestens ein - gegebenenfalls gepresstes oder brikettiertes - organisches Pigment ausgewählt aus der Gruppe der Azo-, Chinacridon-, Phthalocyanin- und Perylen-Pigmente und Indigoide oder anorganisches Pigment ausgewählt aus der Gruppe Eisenoxide oder Chromoxide oder Mischungen davon enthalten und die aufgranulierte äußere Schicht beziehungsweise die aufgranulierten äußeren Schichten jeweils mindestens ein Hilfmittel enthalten und

c) in der aufgranulierten äußeren Schicht beziehungsweise den aufgranulierten äusseren Schichten

1) mindestens ein anderes Hilfsmittel als im gepressten oder brikettierten Kern vorhanden ist oder

2) mindestens ein anderes organisches oder anorganisches Pigment als im gepressten oder brikettierten Kern vorhanden ist und mindestens ein anderes Hilfsmittel als im gepressten oder brikettierten Kern vorhanden ist.

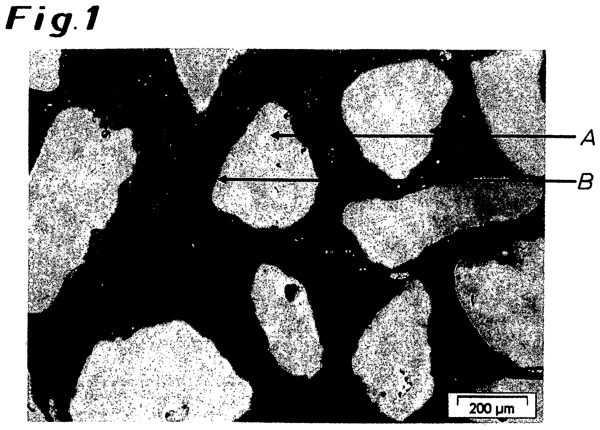

Auf diese Weise gelingt es, die Press- und Brikettiergranulate zu verbessern und das Herstellungsverfahren wesentlich zu optimieren, da unabhängig vom späteren Anwendungsmedium stets eine einheitliche gepresste oder brikettierte Kern-Fraktion eingesetzt werden kann. Diese einheitliche Kern-Fraktion kann in geeignete Gebinde abgefüllt und zwischengelagert oder an einen anderen Ort transportiert werden, an dem die spätere Weiterverarbeitung erfolgt. Bei der Weiterverarbeitung wird auf die einheitliche Kernfraktion in einem weiteren Verfahrensschritt mindestens eine äußere Schicht aus mindestens einem Pigmentpulver aufgranuliert. Das Pigmentpulver aus der Kern-Fraktion und das aus der aufgranulierten äußeren Schicht müssen nicht notwendigerweise identisch sein. Dies ist insbesondere bei der Herstellung von Granulaten aus Pigmentmischungen von Vorteil, da auf das vorherige Vermischen der einzelnen Pigmente verzichtet werden kann. So lassen sich beispielsweise durch Mischen von Eisenoxidrot- und Eisenoxidgelb-Pigmenten verschiedene Orangefarbtöne oder durch Mischen von Eisenoxidgelb- und Phthalocyaninblau-Pigmenten verschiedene Grüntöne herstellen. Zur Herstellung eines Eisenoxid-Orangegranulates kann also entweder auf ein kompaktiertes Eisenoxidgelb-Pigment (Kern-Fraktion) durch Zugabe eines Eisenoxidrot-Pigments dieses als äußere Schicht aufgranuliert werden oder auf ein kompaktiertes Eisenoxidrot-Pigment (Kern-Fraktion) durch Zugabe eines Eisenoxidgelb-Pigments dieses als äußere Schicht aufgranuliert werden. Fig. 1 verdeutlicht dieses Prinzip. Sie zeigt die lichtmikroskopische Aufnahme eines Eisenoxid-Orangegranulates, bei dem auf ein kompaktiertes und nachgerolltes Eisenoxidgelb-Pigment (Kern-Fraktion - als "A" in Fig. 1 bezeichnet) ein Eisenoxidrotpigment als äußere Schicht aufgranuliert wurde (als "B" in Fig. 1 bezeichnet). Zum Anfertigen der lichtmikroskopischen Aufnahme wurden die Granulatteilchen in ein Harz eingegossen und angeschliffen.

Wesentlich bei dem erfindungsgemäßen mehrstufigen Verfahren ist, dass im ersten Schritt durch Zugabe des Hilfsmittels oder der Hilfsmittel zu einem oder mehreren organischen oder anorganischen Pigmentpulvern ein ausreichend kohäsives homogenes Material erzeugt wird. Dazu werden in der Regel Mischer verwendet, in Einzelfällen kann es aber auch vorteilhaft sein, eine Mühle zu verwenden. Im zweiten Schritt erfolgt dann die ein- oder mehrfache Pressung oder Brikettierung. Durch einen Zerkleinerungsschritt wie beispielsweise Siebgranulieren wird die Kern-Fraktion hergestellt, die gegebenenfalls durch einen Trennungsschritt isoliert, gerundet oder beschichtet werden kann. Ein Trennungsschritt zur Isolierung der Kern-Fraktion ist allerdings nicht zwingend erforderlich, da das beim Zerkleinerungsschritt anfallende Pulver auch unmittelbar auf die Kern-Fraktion aufgranuliert werden kann. Der wesentliche Verfahrensschritt bei dem erfindungsgemäßen Verfahren ist ein Nachrollen unter Zugabe von einem oder mehreren organischen oder anorganischen Pigmenten oder Pigmentmischungen, wobei das beziehungsweise die Pigmente oder Pigmentmischungen vor oder während der Zugabe mit einem oder mehreren Hilfsmitteln vermischt werden, so dass noch mindestens eine äußere Schicht aufgranuliert wird. Das Aufgranulieren der äußeren Schichten) kann auch in einem Wirbelbett oder in einem Fließbett erfolgen. Das oder die eingesetzte(n) Hilfsmittel sollen im jeweiligen Anwendungsmedium eine möglichst gute Verarbeitbarkeit erlauben.

Ein weiterer Vorteil des erfindungsgemäßen Verfahrens liegt unter anderem darin, dass von getrocknetem und eventuell gemahlenem Pigmentpulver ausgegangen werden kann. Dies ist insbesondere dann besonders wirtschaftlich, wenn das Pigment durch eine Trockensynthese - wie beispielsweise die Herstellung von Eisenoxidrot durch Kalzination von Eisenoxidschwarz oder -gelb - hergestellt wird. Bei der Sprühgranulation ist beispielsweise eine erneute Anmaischung und danach ein zusätzlicher Trocknungsschritt erforderlich. Außerdem ist es energetisch sehr aufwendig, das zum Anmaischen verwendete Wasser wieder durch Verdampfen zu entfernen.

Bevorzugt werden anorganische Pigmente eingesetzt. Es können aber auch Füllstoffe eingesetzt werden.

Als Hilfsmittel können sowohl anorganische als auch organische Substanzen eingesetzt werden.

Als Hilfsmittel werden vorzugsweise Wasser, Salze aus der Gruppe der Phosphate, Phosphonate, Carbonate, Sulfate, Sulfonate, Silikate, Aluminate, Borate, Titanate, Formiate, Oxalate, Zitrate, Tartrate, Stearate, Acetate, Polysaccharide, Cellulosederivate, wie bevorzugt Celluloseether oder Celluloseester, Phosphonocarbonsäuren, modifizierte Silane, Silikonöle, Öle aus biologischem Anbau (bevorzugt Rapsöl, Sojabohnenöl, Maiskeimöl, Olivenöl, Kokosöl, Sonnenblumenöl), raffinierte Erdöle auf paraffinischer und/oder naphthenischer Basis, synthetisch hergestellte Öle, Alkylphenole, Glykole, Polyether, Polyglykole, Polyglykolderivate, Ethylenoxid-Propylenoxid-Copolymere, Eiweißfettsäurekondensationsprodukte, Alkylbenzolsulfonate, Alkylnaphthalinsulfonate, Ligninsulfonate, sulfatierte Polyglykolether, Melaminformaldehydkondensate, Naphthalinformaldehydkondensate, Gluconsäure, Polyacrylate, Polycarboxylatether, Polyhydroxyverbindungen, Polyhydroxyaminoverbindungen oder Lösungen oder Mischungen oder Suspensionen oder Emulsionen davon eingesetzt.

Als Hilfsmittel im Sinne dieser Erfindung gelten auch Emulgatoren, Netzmittel und Dispergierhilfsmittel.

Als Emulgatoren kommen vorzugsweise Emulgatoren mit HLB-Werten von 7 bis 40, insbesondere von 8 bis 18, für den Einsatz in Baustoffen mit wässrigen Systemen wie zum Beispiel Beton in Frage, enthaltend Alkyl- oder Acryl-Reste sowie hydrophile Zwischen- und Endgruppen wie zum Beispiel Amide, Amine, Ether, Hydroxyl, Carboxylat, Sulfat, Sulfonat, Phosphat, Phosphonat, Amin-Salz, Polyether, Polyamid, Polyphosphat. Die Substanzen können entsprechend ihrem HLB-Wert einzeln oder in Kombination eingesetzt.

Als Netzmittel sind vorzugsweise Alkylbenzolsulfonate, Fettalkoholsulfate, Fettalkoholethersulfate, Fettalkoholethoxylat, Alkylphenolethoxylat, verzweigte und/oder unverzweigte Alkan- oder Olefinsulfonate, verzweigte und/oder unverzweigte Alkan- oder Olefinsulfate und Sulfosuccinate geeignet.

Als Dispergierhilfsmittel werden vorzugsweise Liginsulfonate, Melaminsulfonate, Naphthalinsulfonate, Seifen, Metallseifen, Polyvinylalkohole, Polyvinylsulfate, Polyacrylamide, Polyacrylate, Polycarboxylatether, mittel- und langkettige Alkansulfate oder -sulfonate oder -sulfosuccinate sowie mittel- und langkettige Alkanphosphate oder -phosphonate eingesetzt.

Die Hilfsmittel können bevorzugt in Verbindung mit weiteren Additiven wie zum Beispiel Entschäumern, Retentionsmitteln oder Duftstoffen eingesetzt werden.

Den Pigmentgranulaten können vorzugsweise beim Mischen zusätzlich auch Konservierungsstoffe in einer Konzentration von 0,01 bis 1 Gew.-% bezogen auf das Gewicht der Pigmentgranulate zugesetzt werden. Als Beispiele seien Formaldehyd-abspaltende Verbindungen, phenolische Verbindungen oder Isothiazolinon-Zubereitungen genannt.

Die Pigmentgranulate enthalten vorzugsweise Hilfsmittel in einer Gesamtmenge von 0,001 bis 10 Gew.-%, besonders bevorzugt von 0,01 bis 5 Gew.-%, ganz besonders bevorzugt von 0,1 bis 5 Gew.-%, bezogen auf die Gesamtmenge der Pigmente.

Der gepresste oder brikettierte Kern gemäß a) und die aufgranulierte äußere Schicht beziehungsweise die aufgranulierten äußeren Schichten gemäß b) und c) enthalten vorzugsweise jeweils ein anorganisches oder jeweils ein organisches Pigment.

Vorzugsweise enthält der gepresste oder brikettierte Kern gemäß a) und die aufgranulierte äußere Schicht beziehungsweise die aufgranulierten äußeren Schichten gemäß b) und c) das gleiche Pigment, aber in mindestens einer der aufgranulierten äußeren Schichten ist ein in Menge oder Art verschiedenes Hilfsmittel zum gepressten oder brikettierten Kern gemäß a) enthalten.

Der gepresste oder brikettierte Kern gemäß a) und die aufgranulierte äußere Schicht beziehungsweise die aufgranulierten äußeren Schichten gemäß b) und c) enthalten vorzugsweise das gleiche Pigment, wobei das Pigment in mindestens einer der aufgranulierten äußeren Schichten nicht gepresst und nicht brikettiert ist.

Der gepresste oder brikettierte Kern gemäß a) und die aufgranulierte äußere Schicht beziehungsweise die aufgranulierten äußeren Schichten gemäß b) und c) enthalten vorzugsweise jeweils mehrere anorganische Pigmente und/oder jeweils mehrere organische Pigmente.

Der gepresste oder brikettierte Kern gemäß a) und die aufgranulierte äußere Schicht beziehungsweise die aufgranulierten äußeren Schichten gemäß b) und c) enthalten vorzugsweise die gleichen organischen oder anorganischen Pigmente aber mindestens ein in Menge oder Art verschiedenes Hilfsmittel zum Kern.

Der gepresste oder brikettierte Kern gemäß a) und die aufgranulierte äußere Schicht beziehungsweise die aufgranulierten äußeren Schichten gemäß b) und c) enthalten vorzugsweise die gleichen organischen und/oder anorganischen Pigmente, wobei das Pigment in mindestens einer der aufgranulierten äußeren Schichten nicht gepresst und nicht brikettiert ist.

Das beziehungsweise die Pigmente, welche die aufgranulierte äußere Schicht gemäß b) und c) bildet beziehungsweise bilden, beträgt beziehungsweise betragen vorzugsweise insgesamt maximal das vierfache, bevorzugt maximal das gleiche Gewicht, bezogen auf das Gewicht des gepressten oder brikettierten Kerns gemäß a).

Im gepressten oder brikettierten Kern gemäß a) sind vorzugsweise andere Hilfsmittel als in den aufgranulierten äußeren Schicht gemäß b) und c) enthalten.

Der gepresste oder brikettierte Kern gemäß a) ist vorzugsweise mit einem oder mehreren Hilfsmitteln ein- oder mehrfach beschichtet.

Die aufgranulierte äußere Schicht beziehungsweise die aufgranulierten äußeren Schichten gemäß b) und c) sind vorzugsweise jeweils mit einem oder mehreren Hilfsmitteln ein- oder mehrfach beschichtet.

Nur die äußerste der aufgranulierten äußeren Schichten gemäß b) und c) ist vorzugsweise mit einem oder mehreren Hilfsmitteln ein- oder mehrfach beschichtet.

Die anorganischen Pigmentgranulate weisen vorzugsweise eine Schüttdichte im Bereich von 0,3 bis 4,0 g/cm$^3$, bevorzugt im Bereich von 0,5 bis 2,0 g/cm$^3$ auf, wobei die Pigmentgranulate, die Ruß oder organische Pigmente enthalten, vorzugsweise eine Schüttdichte im Bereich von 0,1 bis 2,5 g/cm$^3$ aufweisen.

Vorzugsweise weisen mindestens 85 % der Pigmentgranulate eine Teilchengröße im Bereich von 80 bis 3000 μm, bevorzugt im Bereich von 100 bis 1500 μm, auf.

Die Pigmentgranulate weisen vorzugsweise einen Restwassergehalt von unter 4 Gew.-%, bevorzugt unter 2 Gew.-%, auf. Unter Restwasser im Sinne dieser Erfindung wird die Restfeuchte verstanden.

Die Pigmentgranulate enthalten vorzugsweise zusätzlich Konservierungsstoffe, Entschäumer, Retentionsmittel, Absetzverhinderer und/oder Duftstoffe.

Die Erfindung betrifft auch ein Verfahren zur Herstellung der erfindungsgemäßen Pigmentgranulaten, dadurch gekennzeichnet, dass

a) ein oder mehrere organische oder anorganische Pigmente mit einem oder mehreren Hilfsmitteln vermischt werden,

b) diese Mischung mindestens einem Press- oder Brikettierschritt unterworfen wird, um Schülpen zu erhalten,

c) diese Schülpen in mindestens einem Schritt in Keime und Pulver zerkleinert werden,

dl) die Keime vom Pulver getrennt werden, indem die Fraktion größer 80 μm, bevorzugt größer 100 μm als Kern-Fraktion dient und gegebenenfalls

(i) einem Rundungsschritt unterworfen wird und/oder

(ii) mit einem oder mehreren Hilfsmitteln beschichtet wird,

wobei Schritt d1)(ii) auch vor d1)(i) stattfinden kann, beziehungsweise beide Schritte auch gleichzeitig stattfinden können und das erhaltene Produkt im Produktionsprozeß verbleibt, während die andere Fraktion aus dem Prozeß ausgeschleust oder zurückgeführt wird,

e) und auf das erhaltene Produkt unter Zusatz von einem oder mehreren organischen oder anorganischen Pigmenten oder Mischungen davon durch Nachrollen mindestens eine äußere Schicht aufgranuliert wird, wobei

(i) das oder die organischen oder anorganischen Pigmente oder Mischungen zuvor mit einem oder mehreren Hilfsmitteln vermischt wurden, und/oder

(ii) während des Nachrollens ein oder mehrere Hilfsmittel zugesetzt werden und/oder

(iii) das oder die organischen oder anorganischen Pigmente beziehungsweise die Mischung aus organischen oder anorganischen Pigmenten und mindestens einem Hilfsmittel zuvor einem oder mehreren Press- oder Brikettierschritten unterworfen wurde,

um ein nachgerolltes Granulat zu erhalten und

f) das so nachgerollte Granulat gegebenenfalls ein- oder mehrfach mit Hilfsmitteln beschichtet wird.

Beim Pressen oder Brikettieren (Kompaktieren, Schritt b)) ist eine wichtige Kennziffer die Presskraft (kN) pro cm Walzenbreite (Linienkraft). Beim Kompaktieren zwischen Walzen wird von einer linienförmigen Übertragung der Presskraft ausgegangen, da eine Pressfläche nicht definiert werden kann und deshalb kein Druck (kN/cm$^2$) berechenbar ist.

Der Press- oder Brikettierschritt b) erfolgt vorzugsweise über eine Walzenpresse oder Matrizenpresse und bei Linienkräften von 0,1 bis 50 kN/cm, bevorzugt von 0,1 bis 20 kN/cm.

Wenn mehrere Press- oder Brikettierschritte erfolgen, können identische oder unterschiedliche Linienkräfte angewendet werden. Die Anwendung unterschiedlicher Linienkräfte ist beispielsweise dann besonders vorteilhaft, wenn die organischen und/oder anorganischen Pigmente eine sehr niedrige Schüttdichte aufweisen, so dass in einem ersten Press- oder Brikettierschritt eine Vorverdichtung erfolgt.

Vorzugsweise erfolgen mehrere Press- oder Brikettierschritte b) unmittelbar nacheinander, wobei identische oder unterschiedliche Press- oder Brikettieraggregate eingesetzt werden und die Press- oder Brikettierschritte bei identischen oder unterschiedlichen Linienkräften im Bereich von 0,1 bis 50 kN/cm, bevorzugt von 0,1 bis 20 kN/cm durchgeführt werden.

Die Kompaktierung erfolgt bevorzugt bei niedrigen Linienkräften. Die angewendeten Linienkräfte liegen im allgemeinen vorzugsweise im untersten Bereich der kommerziell erhältlichen Geräte. Kommerziell erhältliche Geräte sind zum Beispiel der Pharmapaktor 200/50 der Firma Bepex GmbH, Leingarten/Deutschland.

Die Zerkleinerung im Schritt c) kann über alle marktüblichen Zerkleinerungsaggregate, wie Brecher, Stachelwalzen, Walzen mit Friktionsvorrichtungen oder Siebgranulatoren beziehungsweise Siebmühlen, bei denen das Material durch ein Passiersieb gedrückt wird (sogenannte Schroter), erfolgen. Die Rotoren bewegen sich, wie allgemein bekannt, umlaufend oder oszillierend mit einer Umfangsgeschwindigkeit von 0,05 m/sec bis 10 m/sec, vorzugsweise 0,3 bis 5 m/sec. Der Abstand zwischen Rotor und Sieb oder Lochscheibe beträgt 0,1 bis 15 mm, bevorzugt 0,1 bis 5 mm, besonders bevorzugt 1 bis 2 mm.

Vorzugsweise erfolgt die Zerkleinerung in Schritt c) durch ein Passiersieb als Zerkleinerungsaggregat mit einer Maschenweite von 0,5 bis 4 mm, bevorzugt von 1 bis 2 mm.

Unter Umständen ist es vorteilhaft, den Zerkleinerungsschritt c) mehrfach hintereinander durchzuführen. Dazu können mehrere Siebgranulatoren oder Siebmühlen - vorzugsweise mit unterschiedlichen Maschenweiten der Passiersiebe - hintereinander geschaltet werden. Vorzugsweise erfolgen mehrere Zerkleinerungsschritte c) über Passiersiebe unmittelbar nacheinander, wobei unterschiedliche Maschenweiten der Passiersiebe verwendet werden und im letzten Zerkleinerungsschritt ein Passiersieb mit einer Maschenweite von 0,5 bis 4 mm, bevorzugt von 1 bis 2 mm, eingesetzt wird.

Wenn mehrere Zerkleinerungsschritte c) unmittelbar nacheinander durchgeführt werden, können auch verschiedene Zerkleinerungsaggregate miteinander kombiniert werden. So kann zum Beispiel vor der Verwendung eines Siebgranulators oder einer Siebmühle erst eine Grobzerkleinerung der Schülpen über Walzen- oder Backenbrecher erfolgen. Dadurch kann unter anderem die Teilchengrößenverteilung des zerkleinerten Produktes beeinflußt werden. Vorzugsweise erfolgen mehrere Zerkleinerungsschritte c) unmittelbar nacheinander, wobei unterschiedliche Zerkleinerungsaggregate eingesetzt werden.

Vor der Zerkleinerung im Schritt c) werden vorzugsweise die Schülpen aus b) in zwei Fraktionen aufgetrennt, wobei die grobe Fraktion, in der mindestens 85 % der Teilchen größer 500 $\mu$m, bevorzugt größer 600 $\mu$m sind, dem Schritt c) zugeführt und in einem oder mehreren Schritten zerkleinert wird und die feine Fraktion in den Schritt d1) gegeben wird, um im Schritt d1) getrennt von oder zusammen mit den Keimen und dem Pulver aus Schritt c) abermals in zwei oder mehrere Fraktionen aufgetrennt zu werden und die Kern-Fraktion zu bilden.

Die Keime und Pulver des zerkleinerten Produktes aus Schritt c) werden in Schritt d1) vorzugsweise in zwei Fraktionen aufgetrennt, wobei der Feinanteil kleiner 80 $\mu$m, bevorzugt kleiner 100 $\mu$m, ganz besonders bevorzugt kleiner 250 $\mu$m, ausgeschleust oder in den Prozeß zurückgeführt wird und die grobe Fraktion größer 80 $\mu$m, bevorzugt größer 100 $\mu$m, ganz besonders bevorzugt größer 250 $\mu$m, als Kern-Fraktion dient, die im Prozeß weiter umgesetzt wird.

Die Keime und Pulver des zerkleinerten Produktes aus Schritt c) wird vorzugsweise in Schritt d1) in drei Fraktionen aufgetrennt, wobei der Feinanteil und der Grobanteil ausgeschleust oder zurückgeführt werden und die mittlere Fraktion im Bereich von 80 bis 2 000 $\mu$m, bevorzugt im Bereich von 100 bis 1500 $\mu$m, ganz besonders bevorzugt im Bereich von 250 bis 1000 $\mu$m als Kern-Fraktion dient, die im Prozeß weiter umgesetzt wird und gegebenenfalls einem Rundungsschritt unterworfen wird und/oder zusätzlich beschichtet wird. Der Rundungsschritt d1)(i) erfolgt vorzugsweise auf einem Drehteller (Pelletierteller), in einer Drageetrommel oder einer Drehtrommel (Pelletiertrommel), in einer Siebanlage oder in einem Wirbelbett oder in einem Fließbett. Hierbei kann der Staubanteil abgesaugt oder in der Wirbelschicht mit der Luft ausgetragen werden. Der Staubanteil kann an anderer Stelle wieder in den Prozeß zurückgeführt werden.

Vor dem Schritt e) wird vorzugsweise die Kern-Fraktion aus Schritt d1) in zwei Fraktionen aufgetrennt, wobei der Feinanteil oder der Grobanteil ausgeschleust oder zurückgeführt werden und die Fraktion im Bereich von 80 bis 2000 $\mu$m, bevorzugt im Bereich von 100 bis 1500 $\mu$m, dem Schritt e) zugeführt wird.

Vor dem Schritt e) wird vorzugsweise die Kern-Fraktion aus Schritt d1) in drei Fraktionen aufgetrennt, wobei der Feinanteil und der Grobanteil ausgeschleust oder zurückgeführt werden und die mittlere Fraktion im Bereich von 80 bis 2000 $\mu$m, bevorzugt im Bereich von 100 bis 1500 $\mu$m, dem Schritt e) zugeführt wird.

Bei dem anschließenden Aufbaugranulationsschritt e) werden zu dem aus den oben beschriebenen Verfahrensschritten erhaltenen Produkt ein oder mehrere organische oder anorganische Pigmente oder Mischungen aus organischen und/oder anorganischen Pigmenten, die zuvor mit einem oder mehreren Hilfsmitteln vermischt wurden, zugegeben und durch Nachrollen aufgranuliert. Der Nachrollschritt unter e) erfolgt vorzugsweise auf einem Drehteller (Pelletierteller), in einer Drageetrommel oder einer Drehtrommel (Pelletiertrommel). Dabei werden das beziehungsweise die verwendete(n) Hilfsmittel so gewählt, dass sie eine gute Verarbeitbarkeit im gewünschten Anwendungsmedium erlauben. Das oder die im Verfahrensschritt e) verwendeten Hilfsmittel muß beziehungsweise müssen somit nicht notwendigerweise mit dem oder den Hilfsmittel(n) identisch sein, das beziehungsweise die im Verfahrensschritt a) zugesetzt wurde(n). Das gleiche gilt für das oder die organische(n) oder anorganische(n) Pigment(e). Im Verfahrensschritt e) kann es durchaus vorteilhaft sein, ein anderes Pigment oder andere Pigmente oder eine andere Pigmentmischung wie im Verfahrensschritt a) einzusetzen. Wenn im Verfahrensschritt e) mehrere Pigmente zugesetzt werden, ist es unerheblich, ob diese nacheinander zugesetzt werden, oder ob zuvor eine Mischung aus den Pigmenten hergestellt wurde und diese Mischung im Schritt e) zugesetzt wird. Ebenso ist es unerheblich, ob eine Pigmentmischung, die ein oder mehrere Hilfsmittel enthält, dadurch hergestellt wird, dass erst die Pigmentmischung hergestellt wird und diese anschließend mit einem oder mehreren Hilfsmitteln vermischt wird, oder dass erst ein oder mehrere Pigmente mit einem oder mehreren Hilfsmitteln vermischt werden und die bereits mit Hilfmittel(n) vermischten Pigmente abschließend gemischt werden.

Vorzugsweise beträgt beziehungsweise betragen das beziehungsweise die bei Schritt e) zugesetzte(n) organische(n) und/oder anorganische(n) Pigment(e) insgesamt maximal das Vierfache, bevorzuft maximal das Einfache, bezogen auf das Gewicht der im Schritt e) eingesetzten Kern-Fraktion.

Das beziehungsweise die im Schritt e) eingesetzte(n) organische(n) und/oder anorganische(n) Pigment(e) sind vorzugsweise von dem beziehungsweise den organischen und/oder anorganischen Pigment(en), das beziehungsweise die im Verfahrensschritt a) eingesetzt wurde(n), verschieden.

Im Schritt e) wird vorzugsweise ein organisches oder ein anorganisches Pigment zugesetzt.

Im Schritt e) werden vorzugsweise mehrere organische und/oder anorganische Pigmente nacheinander zugesetzt.

Im Schritt e) werden insbesonders mehrere organische und/oder anorganische Pigmente zugesetzt, wobei diese zuvor miteinander vermischt wurden.

Das beziehungsweise die im Schritt e) eingesetzte(n) organische(n) und/oder anorganische(n) Pigment(e) werden vorzugsweise zuvor einzeln oder als Mischung mit einem oder mehreren Hilfsmitteln vermischt.

Das nach dem Schritt e) erhaltene Granulat wird vorzugsweise vor dem Schritt f) in zwei Fraktionen aufgetrennt, und nur die Fraktion, in der die Teilchen größer 80 $\mu$m, bevorzugt größer 250 $\mu$m sind, wird in den Schritt f) gegeben, während die feine Fraktion aus dem Prozeß ausgeschleust oder zurückgeführt wird.

Das nach dem Schritt e) erhaltene Granulat wird vorzugsweise vor dem Schritt f) in drei Fraktionen aufgetrennt, und nur die Fraktion, in der mindestens 85 % der Teilchen größer 80 $\mu$m, bevorzugt größer 100 $\mu$m, sind oder im Bereich von 80 bis 3000 $\mu$m, bevorzugt im Bereich von 100 bis 1500 $\mu$m, liegen wird in den Schritt f) gegeben, während die anderen Fraktionen aus dem Prozeß ausgeschleust oder zurückgeführt werden.

Vorzugsweise erfolgen zusätzlich noch ein oder mehrere Trocknungsschritte.

Allgemeine Beschreibung des Herstellverfahrens

Das im Schritt a) beschriebene Vermischen des beziehungsweise der organischen oder anorganischen Pigmente(s) mit einem oder mehreren Hilfsmitteln kann in konventionellen Mischern erfolgen. Dem Fachmann ist eine Reihe von Aggregaten und Aggregat-Typen bekannt. In Einzelfällen kann es vorteilhaft sein, für den Mischvorgang auch eine Mühle zu verwenden. Analoges gilt für die Herstellung der im Verfahrensschritt e) eingesetzten Mischung aus Pigment(en) und Hilfsmitteln).

Vor der Zerkleinerung im Schritt c) können die Schülpen aus b) vorzugsweise in zwei Fraktionen aufgetrennt werden (Zwischenschritt x), um dann die grobe Fraktion, in der mindestens 85 % der Teilchen größer 500 $\mu$m, bevorzugt 600 $\mu$m, sind, dem Schritt c) zugeführt und in einem oder mehreren Schritten zerkleinert wird und die feine Fraktion in den Schritt d1) gegeben wird, um im Schritt d1) getrennt von oder zusammen mit den Keimen und dem Pulver aus Schritt c) abermals in zwei oder mehrere Fraktionen aufgetrennt zu werden und die Kern-Fraktion bilden.

Bevorzugt wird lediglich die grobe Fraktion aus Zwischenschritt x) im Schritt c) zerkleinert, während die feine Fraktion aus Zwischenschritt x) im Schritt d1) in zwei oder mehrere Fraktionen aufgetrennt wird.

Der Zwischenschritt x) kann bevorzugt durch Sichten oder Sieben (mechanisches Trennen) erfolgen. Vorzugsweise werden Siebmaschinen eingesetzt wie zum Beispiel Trommelsiebe, Schwingsiebe und Vibrationssiebe.

Bevorzugt werden die Keime und das Pulver des zerkleinerten Produktes in d1) in zwei Fraktionen aufgetrennt, wobei die Fraktion kleiner 80 $\mu$m, bevorzugt kleiner 100 $\mu$m, ganz besonders bevorzugt kleiner 250 $\mu$m, ausgeschleust oder in den Prozeß zurückgeführt wird und die Fraktion größer 80 $\mu$m, bevorzugt größer 100 $\mu$m, ganz besonders bevorzugt größer 250 $\mu$m als Kern-Fraktion dient. Bevorzugt beträgt die Menge des Feinanteils 10 bis 50 Gew.-%,

besonders bevorzugt 10 bis 30 Gew.-%. Der Feinanteil wird aus dem Prozeß ausgeschleust und kann an anderer Stelle wieder in den Prozeß zurückgeführt werden. Der im Prozeß übrigbleibende Anteil dient als Kern-Fraktion und wird gegebenenfalls in einem weiteren Schritt d1)(i) gerundet und/oder mit einem oder mehreren Hilfmitteln im Schritt d1)(ii) beschichtet.

Besonders bevorzugt werden die Keime und das Pulver des zerkleinerten Produktes im Schritt d1) in drei Fraktionen aufgetrennt, wobei der Feinanteil und der Grobanteil aus dem Prozeß ausgeschleust oder in den Prozeß zurückgeführt werden und die mittlere Fraktion im Bereich von 80 bis 2000 $\mu$m, besonders bevorzugt im Bereich von 100 bis 1500 $\mu$m, ganz besonders bevorzugt im Bereich von 250 bis 1000 $\mu$m als Kern-Fraktion dient. Bevorzugt beträgt die Menge des Fein- und Grobanteils 10 bis 50 Gew.-%, besonders bevorzugt 10 bis 30 Gew.-%. Der Fein- und Grobanteill wird aus dem Prozeß ausgeschleust und kann an anderer Stelle wieder in den Prozeß zurückgeführt werden. Der im Prozeß übrigbleibende Anteil dient als Kern-Fraktion und wird gegebenenfalls in einem weiteren Schritt d1)(i) gerundet und/oder mit einem oder mehreren Hilfmitteln im Schritt d1)(ii) beschichtet.

Der Rundungsschritt unter d1) kann unter Entfernung des Staubanteils durchgeführt werden. Der Rundungsschritt d1)(i) kann auf einem Drehteller (Pelletierteller), in einer Drageetrommel oder einer Drehtrommel (Pelletiertrommel), in einer Siebanlage oder in einem Wirbelbett oder in einem Fließbett erfolgen. Hierbei kann der Staubanteil abgesaugt oder in der Wirbelschicht mit der Luft ausgetragen werden. Der Staubanteil kann an anderer Stelle wieder in den Prozeß zurückgeführt werden.

Vor dem Verfahrensschritt e) kann es vorteilhaft sein, einen weiteren Zwischenschritt y) durchzuführen, bei dem aus dem Produktstrom eine gewünschte Teilchengrößenfraktion abgetrennt wird. Vorzugsweise wird nur die Fraktion im Bereich von 80 bis 2000 $\mu$m, ganz besonders bevorzugt im Bereich von 100 bis 1500 $\mu$m dem Verfahrensschritt e) zugeführt, während der Fein- und/oder Grobanteil aus dem Prozeß ausgeschleust werden oder wieder in den Prozeß zurückgeführt werden.

Bevorzugt wird vor dem Schritt e) die Kern-Fraktion aus Schritt d1) in zwei Fraktionen aufgetrennt, wobei der Feinanteil oder der Grobanteil ausgeschleust oder zurückgeführt werden und die Fraktion im Bereich von 80 bis 2000 $\mu$m, insbesondere im Bereich von 100 bis 1500 $\mu$m, dem Schritt e) zugeführt wird.

Bevorzugt wird vor dem Schritt e) die Kern-Fraktion aus Schritt d1) in drei Fraktionen aufgetrennt, wobei der Feinanteil und der Grobanteil ausgeschleust oder zurückgeführt werden und die mittlere Fraktion im Bereich von 80 bis 2000 $\mu$m, insbesondere im Bereich von 100 bis 1500 $\mu$m, dem Schritt e) zugeführt wird.

Der Zwischenschritt y) kann bevorzugt durch Sichten oder Sieben (mechanisches Trennen) erfolgen. Vorzugsweise werden Siebmaschinen eingesetzt wie zum Beispiel Trommelsiebe, Schwingsiebe und/oder Vibrationssiebe.

Das Nachrollen im Schritt e) erfolgt vorzugsweise auf einem Drehteller (Pelletierteller) oder in einer Drageetrommel oder einer Drehtrommel (Pelletiertrommel).

Das beziehungsweise die im Verfahrensschritt e) eingesetzte(n) organische(n) oder anorganische(n) Pigment(e) muß beziehungsweise müssen nicht mit dem oder den unter Schritt a) beschriebenen organischen oder anorganischen Pigment(en) identisch sein. Bei der Herstellung von Mischfarben ist die Wahl verschiedener Pigmente sogar besonders vorteilhaft.

Das nach den Schritt e) erhaltene Granulat kann im Schritt f) vorzugsweise noch mit einem oder mehreren Hilfsmitteln ein- oder mehrfach beschichtet werden.

Die Umhüllung der Pigmentgranulate dient zur Erhöhung der Stabilität beziehungsweise als Hilfe bei der Verarbeitung. Diese Schicht kann durch Aufbringen von anorganischen Salzen in Lösung, von Polyolen, Ölen oder Wachsen beziehungsweise Polyethern, Polycarboxylaten, Polycarboxylatethern oder Cellulosederivaten, bevorzugt Carboxymethylcellulose, erzeugt werden.

Nach dem Verfahrensschritt e) kann es vorteilhaft sein, einen weiteren Zwischenschritt z) durchzuführen, bei dem aus dem erhaltenen Granulat eine gewünschte Teilchengrößenfraktion abgetrennt wird. Vorzugsweise wird die Fraktion größer 80 $\mu$m, bevorzugt größer 100 $\mu$m oder die Fraktion im Bereich von 80 bis 3000 $\mu$m, bevorzugt im Bereich von 100 bis 2500 $\mu$m, ganz besonders bevorzugt im Bereich von 250 bis 1500 $\mu$m, abgetrennt und in den Schritt f) gegeben. Über- und/oder Unterkorn können aus dem Prozeß ausgeschleust oder wieder zurückgeführt werden. Gegebenenfalls kann es vorteilhaft sein, den Zwischenschritt z) auch nach dem Schritt f) durchzuführen.

Bevorzugt wird das nach dem Schritt e) erhaltene Granulat vor dem Schritt f) in zwei Fraktionen aufgetrennt und nur die Fraktion, in der die Teilchen größer 80 $\mu$m, insbesondere größer 250 $\mu$m sind, in den Schritt f) gegeben, während die feine Fraktion aus dem Prozeß ausgeschleust oder zurückgeführt wird.

Bevorzugt wird das nach dem Schritt e) erhaltene Granulat vor dem Schritt f) in drei Fraktionen aufgetrennt und nur die Fraktion, in der mindestens 85 % der Teilchen größer 80 $\mu$m, insbesondere größer 100 $\mu$m, sind oder im Bereich von 80 bis 3000 $\mu$m, insbesondere im Bereich von 100 bis 1500 $\mu$m, liegen in den Schritt f) gegeben, während die anderen Fraktionen aus dem Prozeß ausgeschleust oder zurückgeführt werden.

Der Zwischenschritt z) kann bevorzugt durch Sichten oder Sieben (mechanisches Trennen) erfolgen. Vorzugsweise werden Siebmaschinen eingesetzt wie zum Beispiel Trommelsiebe, Schwingsiebe und/oder Vibrationssiebe.

Die Rückführung von abgetrenntem Über- und/oder Unterkorns in den Prozeß kann an verschiedenen Stellen erfolgen. Es wird unter anderem davon abhängig sein, welche Hilfsmittel zugesetzt wurden, ob ein oder mehrere Pigmente für das gesamte Verfahren eingesetzt werden und ob ein Vermischen der Hilfsmittel oder Pigmente über die Rückführung von Über- und Unterkorn erwünscht ist oder nicht. Der Fachmann wird aber ohne Zweifel den für seinen Anwendungsfall idealen Verfahrensschritt in dem erfindungsgemäßen Verfahren erkennen, bei dem die Rückführung des abgetrennten Über- und/oder Unterkorns besonders vorteilhaft ist. Bei der Rückführung des Überkorns kann es vorteilhaft sein, wenn dieses nach der Abtrennung und vor der Rückführung zerkleinert wird.

Das erfindungsgemäße Verfahren läßt sich nicht nur auf anorganische und/oder organische Pigmente anwenden, sondern auch auf Füllstoffe.

Die Erfindung betrifft auch die Verwendung der Pigmentgranulate zur Einfärbung von Baustoffen, wie Beton, Zementmörtel, Putze und Asphalt, und zur Einfärbung von organischen Medien, wie Lacken, Kunststoffen und Farbpasten, und zur Herstellung von Dispersionsfarben und Slurries.

Die Pigmentgranulate werden vorzugsweise mit den Baustoffen in einer Menge von 0,1 bis 10 Gew.-%, bezogen auf Zement, oder bei Asphalt bezogen auf das gesamte Mischgut, vermischt.

Die Pigmentgranulate werden vorzugsweise erst in Wasser suspendiert und anschließend mit den Baustoffen vermischt.

Die Pigmentgranulate werden vorzugsweise mit den organischen Medien vermischt.

Die organischen Medien sind vorzugsweise Kunststoffe.

Die Kunststoffe sind vorzugsweise Thermoplaste, Duroplaste und/oder Elastomere.

Die Pigmentgranulate werden vorzugsweise mit flüssigen Kunststoffen vermischt.

Die organischen Medien sind vorzugsweise Polymere mit gummielastischen Eigenschaften.

Die organischen Medien sind vorzugsweise Pulverlacke.

Die Pigmentgranulate werden vorzugsweise mit den Dispersionsfarben vermischt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Gleiches gilt für alle in der Beschreibung offenbarten Parameter und deren beliebige Kombinationen.

Anhand der nachfolgenden Beispiele wird die Erfindung näher erläutet, ohne dass dadurch eine Einschränkung der Erfindung bewirkt werden soll.

**I. Beschreibung der verwendeten Messmethoden**

**A. Bestimmung der Dispergierbarkeit für Baustoffe**

Die Bestimmung der Dispergierbarkeit für Baustoffe erfolgt in Zementmörtel über die farbmetrische Messung von mit Weißzement hergestellten Prismen bei folgenden Daten:

Zement-Quarzsand-Verhältnis 1:4, Wasser-Zement-Wert 0,35, Pigmentierungshöhe 1,2 %, bezogen auf Zement, verwendeter Mischer von RK Toni Technik, Berlin, mit 5 1-Mischschüssel, Bauform 1551, Drehzahl 140 U/min, Ansatz: 500 g Zement.

Nach 40 s, 55 s, 70 s, 85 s und 100 s Mischzeit werden jeweils Mischungsproben (300 g) entnommen und daraus Probekörper (5 x 10 x 2,5 cm) unter Druck hergestellt (Presskraft 114 kN für 2 Sekunden). Härtung der Probekörper: 24 Std. bei 30 °C und 95 % rel. Luftfeuchte mit anschließendem Trocknen 4 Std. bei 60 °C. Farbdatenmessung über Dataflash® 2000 Datacolor International, 4 Meßpunkte je Stein. Die erhaltenen Mittelwerte werden verglichen mit den Werten einer Referenzprobe. Beurteilt werden der Farbabstand $\Delta E_{ab}^*$ und die Farbstärke (Referenzprobe = 100 %) (DIN 5033, DIN 6174). Im Sinne dieser Anmeldung werden die folgenden farbmetrischen Abkürzungen und Berechnungen verwendet, wie sie aus dem CIELAB-System bekannt sind:

- a* entspricht der Rot-Grün-Achse mit $\Delta a^* = a^*(Probe) - a^*(Bezug)$

- b* entspricht der Gelb-Blau-Achse mit $\Delta b^* = b^*(Probe) - b^*(Bezug)$

- L* entspricht der Helligkeit mit $\Delta L^* = L^*(Probe) - L^*(Bezug)$.

- $\Delta E_{ab}^*$ entspricht dem Farbabstand, wobei $(\Delta E_{ab}^*)^2 = (\Delta L)^2 + (\Delta a^*)^2 + (\Delta b^*)^2$, d. h. $\Delta E_{ab}^* = [(\Delta L)^2 + (\Delta a^*)^2 + (\Delta b^*)^2]^{1/2}$.

Für die relative Farbstärke in % gelten folgende Gleichungen:

$$\text{Relative Farbstärke in \%} = \frac{(K/S)_{Probe}}{(K/S)_{Bezug}} \cdot 100$$

$$K/S = \frac{(1 - \beta^*)^2}{2 \cdot \beta^*}$$

$$\beta^* = \frac{Y/100 - r_0}{1 - r_0 - r_2 \cdot (1 - Y/100)},$$

wobei $r_0 = 0{,}04$ und $r_2 = 0{,}6$ und Y der Normfarbwert (Helligkeit) ist.

Die Berechnung erfolgt in Anlehnung an DIN 53 234.

Die Dispergierbarkeit wird als gut bezeichnet bei einem Farbstärkenunterschied bis 5 % gegenüber der Referenzprobe und einem Farbabstand $\Delta E_{ab}^*$ von maximal 1,5 Einheiten.

**B. Bestimmung der Dispergierbarkeit für Asphalt**

Die Bestimmung der Dispergierbarkeit in Asphalt erfolgte nach folgendem Verfahren: Das Pigmentpulver beziehungsweise Pigmentgranulat wird in einem beheizbaren Labormischer (Rego-Mischer) zusammen mit einem Straßenbaubitumen des Typs B 80 (Handelsprodukt der Shell AG) und Zuschlagstoffen 60 Sekunden lang bei 180 °C gemischt. Mit der Mischung werden Prüfkörper nach Marshall hergestellt ("The Shell Bitumen Handbook, Shell Bitumen U.K., 1990, Seite 230-232). Farbtonunterschiede der Marshall-Körper zu einer vorgegebenen Vergleichsprobe aus Pigmentpulver werden farbmetrisch durch Vergleich der Rotwerte a* beurteilt (Minolta Chromameter II, Normlichtart C, CIELAB-System, DIN 5033, DIN 6174). Unterschiede in den a*-Werten kleiner 0,5 Einheiten sind visuell nicht unterscheidbar.

**C. Bestimmung der Dispergierbarkeit für Kunststoffe**

Die Bestimmung der Dispergierbarkeit in Kunststoffen erfolgt in Anlehnung an DIN EN 13900-2: Pigment und Füllstoffe - Dispergierverfahren und Beurteilung der Dispergierbarkeit in Kunststoffen, Teil 2: Bestimmung der koloristischen Eigenschaften und der Dispergierhärte in weichmacherhaltigen Polyvinylchlorid(PVC-P)-Formmassen im Walztest. Das zu prüfende Pigment beziehungsweise Pigmentgranulat wird bei 160 ± 5 °C in der Aufhellung in einer Mischung aus Pigment und einem Titandioxid-Weißpigment-Pulver (Tronox® R-FK-2; Tronox® R-FK-2 ist ein Handelsprodukt der Tronox Incorporated) im Gewichtsverhältnis = 1:5 auf einem Mischwalzwerk in PVC dispergiert. Das erhaltene Walzfell wird geteilt und die eine Hälfte anschließend durch Walzen bei Raumtemperatur erhöhten Scherkräften ausgesetzt. Als Maß für die Dispergierbarkeit gilt bei Buntpigmenten die Dispergierhärte $DH_{PVC-P}$, die die prozentuale Zunahme der Farbstärke nach dem Walzen bei Raumtemperatur angibt.

Die Farbstärke des kaltgewalzten PVC-Fells wird als Bezug auf 100% festgesetzt wird gemäß den bereits oben angegebenen Formeln ermittelt.

Die Dispergierhärte $DH_{PVC-P}$ wird dann gemäß

$$DH_{PVC-P} = 100 * \left( \frac{F_{kaltgewalzte\,Probe}}{F_{heißgewalzte\,Probe}} - 1 \right)$$

berechnet. Dabei ist $F_{heißgewalzte\,Probe}$ der Farbstärkewert des heißgewalzten Probenkörpers und $F_{kaltgewalzte\,Probe}$ entsprechend der Farbstärkewert des kaltgewalzten Probenkörper. Für die Berechnung der Farbstärke gelten die bereits oben angegebenen Formeln, wobei im Falle der Abtestung in Kunststoffen $r_0 = 0{,}05325$ und $r_2 = 0{,}65$ ist.

Zusätzlich wird bei der Bestimmung der Dispergierbarkeit in Kunststoffen noch der Farbabstand $\Delta E_{ab}^*$ zwischen heiß- und kaltgewalztem PVC-Fell bestimmt. Für die Berechnung von $\Delta L^*$, $\Delta a^*$, $\Delta b^*$ gelten die bereits oben angegebenen und aus dem CIELAB-System bekannten Formeln. Das kaltgewalzte PVC-Fell dient auch hier als Bezug. Ein gut dispergierbares Pigment beziehungsweise Pigmentgranulat ist schon bei geringen Scherkräften ausdispergiert, während zum Ausdispergieren eines schwer dispergierbaren Pigments die erhöhten Scherkräfte beim Walzen bei tiefer Temperatur notwendig sind. Daher gilt: je geringer die Dispergierhärte und je kleiner der Farbabstand $\Delta E_{ab}*$ desto besser ist das Pigment dispergierbar. Insbesondere bei Granulaten kommt der Dispergierbarkeit eine große Bedeutung zu, da zuerst die Granulatteilchen zerteilt werden müssen, die dann im Kunststoff zu dispergieren sind. Die Dispergierbarkeit von Buntpigmenten bzw. granulierten Buntpigmenten wird als gut bezeichnet bei einer Dispergierhärte von maximal 10% und bei einem Farbabstand $\Delta E_{ab}*$ von maximal 1,5 Einheiten bei dem oben beschriebenen Prüfverfahren.

## D. Bestimmung der Dispergierbarkeit für Dispersionsfarben

Die Dispergierbarkeit von Buntpigmenten in Dispersionsfarben wird mittels Dissolver bestimmt. Als Prüfmedium wird eine Dispersionsfarbe auf Basis einer PVA-Dispersion (Vinylacetat/Versaticsäurevinylester) mit einer Pigmentvolumenkonzentration von 55% (Pigment/Füllstoff-Verhältnis 40/60) eingesetzt. Bei der Einarbeitung des Pigmentes werden 180 g weiße Dispersionsfarbe vorgelegt, dann 6,0 g des zu prüfenden Buntpigmentes unter Rühren eingestreut (Tronox® R-KB-2/Buntpigment-Gewichtsverhältnis = 5:1; Tronox® R-KB-2 ist ein Handelsprodukt der Tronox Incorporated). Mit einer Dissolverscheibe (Durchmesser 4 cm) werden folgende Dispergierbedingungen eingestellt:

| 10 min | 1000 U/min (2,1 m/s) |
| 20 min | 2000 U/min (4,2 m/s) |
| 10 min | 4500 U/min (9,4 m/s) |

Nach den einzelnen Dispergierzeiten werden Aufzüge mit 150 μm Nassfilmschichtdicke (Spalthöhe der Abziehrakel) angefertigt und bei Raumtemperatur getrocknet. Nach der Trocknung werden die Aufzüge (Anstrichfilme) mit einem scharfkantigen Gegenstand abgezogen, wodurch die nichtdispergierten Pigmentteilchen an der Oberfläche als Punkte beziehungsweise Streifen (Stippen) erscheinen. Die auf die Granulate anzuwendende Dispergierenergie wird mit einer Bewertungsskala von Stufe 1 bis 5 beurteilt:

| Stufe 1: | keine Stippen |
| Stufe 2: | einige Stippen |
| Stufe 3: | maßige Stippen |
| Stufe 4: | viele Stippen |
| Stufe 5: | sehr viele Stippen |

Eine gute Dispergierbarkeit ist nur bei den Bewertungsstufen 1 und 2 gegeben, ab Stufe 3 ist die Bewertung für die aufgewendete Dispergierenergie unzureichend.

## E. Bestimmung der Selbstverflüssigung von Slurries

Bei der Herstellung von Slurries werden 300 g Wasser vorgelegt und unter Rühren mittels einer Dissolverscheibe mit 3,5 cm Durchmesser bei circa 1500 U/min das zu prüfende Pigmentpulver beziehungsweise Pigmentgranulat bei Raumtemperatur ohne weitere Additivzusätze ("Selbstverflüssigung") eingetragen, bis eine Suspension mit 70 Gew.-% Feststoffgehalt erreicht ist. Ergibt sich für diese Ausgangsslurry mit dem Brookfield-Viskosimeter bei der Benutzung der Brookfield-Meß-Spindel Nr. 4 und bei einer Umdrehungszahl von 100 U/min ein Viskositätswert von über 1000 mPas, so wird der Feststoffgehalt durch Zugabe von Wasser in Schritten von 5 Gew.-% erniedrigt, bis sich ein Viskositätswert von unter 1000 mPas einstellt. Ist die Ausgangsslurry mit 70 Gew.-% Feststoffgehalt dagegen sehr dünnflüssig, wird ihr Feststoffgehalt durch Zugabe von Pigmentpulver beziehungsweise Pigmentgranulat in Schritten von 5 Gew.-% erhöht, bis der maximale Feststoffgehalt erreicht ist, der noch einen Viskositätswert von unter 1000 mPas ermöglicht. Im praktischen Einsatz gelten Slurries mit einer Viskosität bis zu 1000 mPas als problemlos handhabbar (pump- und dosierbar). 24 Stunden nach Herstellung der Slurry wird erneut die Viskosität mit dem Brookfield-Viskosimeter unter Benutzung von Spindel Nr. 4 und bei einer Umdrehungszahl von 100 U/min gemessen. Ein Anstieg der Viskosität auf über 1000 mPas ist unerwünscht. Bei der Herstellung von Slurries aus Pigmentpulvern oder Pigmentgranulaten ist ein möglichst hoher Feststoffgehalt bei gleichzeitig möglichst geringer Viskosität wünschenswert. Ein Pigmentgranulat ist daher um so besser für die Herstellung von Slurries ("Selbstverflüssigung") geeignet, wenn die hergestellte Slurry bei einem möglichst hohem Feststoffgehalt eine möglichst geringe Viskosität besitzt.

## F. Bestimmung des Fließverhaltens

Die Bestimmung des Fließverhaltens der Pigmentgranulate erfolgt durch Messung der Auslaufzeit aus einem Trichter mit 100 ml Volumen mit 6 mm Öffnung in Anlehnung an ASTM-Test D 1200-88.

Im folgenden wird anhand von Beispielen die vorliegende Erfindung näher erläutert, ohne dass in diesen Beispielen eine Einschränkung zu sehen ist. Die Granulate aus den Beispielen 1, 3 und 5 wurden nach Verfahren hergestellt, die dem Stand der Technik entsprechen und dienen als Vergleich.

## II. Vergleichsbeispiel 1

50 kg Eisenoxidrot Bayferrox® 160 (Handelsprodukt der Lanxess Deutschland GmbH) wurde mit 1,5 % Polypropylenglykol (mittleres Molekulargewicht circa 2000) in einem Mischer 15 Minuten gemischt. Die Mischung wurde auf einem Kompaktierer 200/50 (Fa. Bepex, Leingarten) mit circa 15 kN (3 kN/cm) gepresst und danach auf einem Schroter (Fa. Frewitt, Fribourg, Schweiz) mit einem Sieb von 1,25 mm Maschenweite zerkleinert. Das zerkleinerte Produkt wurde über ein Sieb mit 250 $\mu$m Maschenweite abgesiebt. Der Anteil des Überkorns betrug circa 77 %. Für die Abtestung in den verschiedenen Medien wurde jeweils die Fraktion 315 $\mu$m bis 1250 $\mu$m eingesetzt (Vergleichsbeispiel 1).

Die Untersuchungsergebnisse des Granulates aus dem Vergleichsbeispiel 1 sind in Tabelle 1 zusammengefasst.

## III. Beispiel 2

In einem Mischer wurde das oben beschriebene Bayferrox® 160 mit folgenden Hilfsmitteln 15 Minuten gemischt:

I. 1,5% Polypropylenglykol (mittleres Molekulargewicht circa 2000)

II. 3,0% Texapon® 842 (Texapon® 842 ist eine wäßrige Lösung von Natrium-Octylsulfat mit circa 30% Wirkstoffgehalt, Handelsprodukt der Cognis Deutschland GmbH & Co. KG)

III. 3,0% einer 30%igen wäßrigen Polyethlyenglykol-Lösung (mittleres Molekulargewicht circa 20.000)

IV. 2,0% einer 45%igen wäßrigen Lösung von Ammonium-Ligninsulfonat

Jeweils 1,0 kg der über 250 $\mu$m abgesiebten Fraktion aus Beispiel 1 wurde in einen Granulierteller mit 70 cm Durchmesser und 53° Neigung eingefüllt und circa 3 Minuten bei 34 UpM gerollt. Jeweils 0,5 kg der

a) oben genannten Mischung I.

b) oben genannten Mischung II.

c) oben genannten Mischung III.

d) oben genannten Mischung IV.

wurde in circa 3 Minuten gleichmäßig in den rotierenden Granulierteller gegeben und danach die gesamte Probe noch 4 Minuten nachgerollt (Beispiele 2a bis 2d).

Für die Abtestung in den verschiedenen Medien wurde jeweils die Fraktion 315 $\mu$m bis 1250 $\mu$m eingesetzt, um stets gleiche Teilchengrößen miteinander zu vergleichen.

Die Untersuchungsergebnisse der Granulate aus den Beispielen 2a bis 2d sind in Tabelle 1 zusammengefasst.

Aus Tabelle 1 ist ersichtlich, dass sich das Vegleichsbeispiel 1 und Beispiel 2a in sämtlichen geprüften anwendungstechnischen Eigenschaften sehr ähnlich verhalten. Durch die reine Aufgranulation einer äußeren Schicht, die das identische Additiv wie der kompaktierte Kern enthält, ist also keine signifikante Verbesserung der anwendungstechnischen Eigenschaften zu erkennen. Die Granulate aus den Beispielen 2b bis 2d zeigen dagegen in mind. einer anwendungstechnischen Eigenschaft deutliche Vorteile gegenüber dem Vergleichsbeispiel 1 und dem Beispiel 2a). So ist die Probe aus Beispiel 2b in Baustoffen deutlich besser dispergierbar: Bereits nach nur 55 s ist eine Endfarbstärke von 99% bezogen auf das eingesetzte Pulver erreicht. Die Granulate aus Vergleichsbeispiel 1 erbringen erst nach 85 s Mischzeit eine Farbstärke von 96%, die Granulate aus Beispiel 2a) zeigen nach 85 s Mischzeit lediglich eine Farbstärke von 94%. Bei der Einarbeitung in Dispersionfarbe beziehungsweise bei der Herstellung von Slurries zeigt die Probe aus Beispiel 2b keine wesentlichen Unterschiede zu dem Vergleichsbeispiel 1 und Beispiel 2a. Die Dispergierbarkeit in Asphalt entspricht den Anforderungen.

Die Granulate aus Beispiel 2c erlauben bei der Selbstverflüssigung einen um 5% höheren Feststoffgehalt als das Vergleichsbeispiel 1 und das Beispiel 2a.

Die Granulate aus Beispiel 2d sind hinsichtlich ihrer Dispergierbarkeit in Baustoffen mit denen aus Beispiel 2b vergleichbar und werden somit besser beurteilt als das Vergleichsbeispiel 1. Zusätzlich ermöglichen aber die Granulate aus Beispiel 2d bei der Einarbeitung in eine Slurry mit 75% einen sehr hohen Feststoffgehalt bei gleichzeitig sehr niedriger Viskosität.

## IV. Vergleichsbeispiel 3

50 kg Eisenoxidrot Bayferrox® 110 (Handelsprodukt der Lanxess Deutschland GmbH) wurde mit 1,0 % Walocel® CRT 30 P (Handelsprodukt der Wolff Cellulosics GmbH & Co. KG) in einem Mischer 15 Minuten gemischt und anschließend über eine Bauermeistermühle mit 1 mm Siebeinsatz homogenisiert. Das homogene Produkt wurde auf einem Kompaktierer 200/50 mit circa 5 kN (1 kN/cm) gepresst und danach auf einem Schroter mit einem Sieb von 1,25 mm Maschenweite zerkleinert. Das zerkleinerte Produkt wurde über ein Sieb mit 250 $\mu$m Maschenweite abgesiebt. Der Anteil des Überkorns betrug circa 87 %. Für die Abtestung in den verschiedenen Medien wurde jeweils die Fraktion 315 $\mu$m bis 1250 $\mu$m eingesetzt (Vergleichsbeispiel 3a).

Ein Teil des zerkleinerten Produktes aus Vergleichsbeispiel 3a wurde ohne vorherige Siebung in einen Granulierteller mit 70 cm Durchmesser und 53° Neigung eingefüllt und circa 10 Minuten diskontinuierlich bei circa 35 UpM gerollt. Das nachgerollte Material wurde über ein Sieb mit 250 $\mu$m Maschenweite abgesiebt. Der Anteil des Überkorns betrug circa 94%. Für die Abtestung in den verschiedenen Medien wurde wieder die Fraktion 315 $\mu$m bis 1250 $\mu$m eingesetzt, um stets gleiche Teilchengrößen miteinander zu vergleichen (Vergleichsbeispiel 3b).

Die Untersuchungsergebnisse der Granulate aus den Vergleichsbeispielen 3a und 3b sind in Tabelle 1 zusammengefasst.

## V. Beispiel 4

Das im Beispiel 3 verwendete Bayferrox® 110-Pulver wurde in einem Mischer mit folgenden Zusätzen 15 Minuten gemischt:

I. 5,0% einer 20%igen wäßrigen Lösung eines teilverseiften Polyvinylalkohols mit niedrigem Molekulargewicht

II. 3,0% einer circa 35%igen wäßrigen Lösung eines Polycarboxylatethers

III. 3,0% einer circa 30%igen wäßrigen Lösung eines Polyacrylates

Jeweils 1,0 kg des abgesiebten Materials (Fraktion > 250 $\mu$m) aus Vergleichsbeispiel 3a wurde in einen Granulierteller mit 70 cm Durchmesser und 53° Neigung eingefüllt und circa 3 Minuten bei circa 34 UpM gerollt. Dann wurden jeweils 0,5 kg der

a) oben genannten Mischung I.

b) oben genannten Mischung II.

c) oben genannten Mischung III.

in circa 3 Minuten gleichmäßig in den rotierenden Granulierteller gegeben und danach die gesamte Probe noch 4 Minuten nachgerollt (Beispiele 4a bis 4c).

Für die Abtestung in den verschiedenen Medien wurde jeweils die Fraktion 315 $\mu$m bis 1250 $\mu$m eingesetzt, um stets gleiche Teilchengrößen miteinander zu vergleichen.

Die Untersuchungsergebnisse der Granulate aus den Beispielen 4a bis 4c sind in Tabelle 1 zusammengefasst.

Aus Tabelle 1 ist ersichtlich, dass sich die Vergleichsbeispiele 3a und 3b in sämtlichen geprüften anwendungstechnischen Eigenschaften mit Ausnahme der Dispergierbarkeit in Kunststoffen ungünstig verhalten. Die Dispergierbarkeit in Baustoffen ist unzureichend, da auch nach 100 s Mischzeit lediglich Endfarbstärken von 91% beziehungsweise 88% resultieren, die Granulate also noch nicht vollständig ausdispergiert sind. Durch die reine Aufgranulation einer äußeren Schicht, die aus kompaktiertem Feinanteil besteht und das identische Additiv wie der kompaktierte Kern enthält, zeigen sich also keine signifikanten Verbesserungen der anwendungstechnischen Eigenschaften. Die Granulate aus Vergleichsbeispiel 3a zeigen außerdem noch ein unbefriedigendes Verhalten bei der Selbstverflüssigung. Eine mit 60% Feststoffgehalt hergestellte Slurry ist zwar relativ dünnflüssig, dickt sich jedoch im Laufe eines Tages sehr stark ein und ist schließlich mit einer Visksität > 1700 mPas nicht mehr handhabbar.

Die Granulate aus den Beispielen 4a bis 4c zeigen dagegen in mind. einer anwendungstechnischen Eigenschaft deutliche Vorteile gegenüber den Vergleichsbeispielen. So ist das Granulat aus Beispiel 4a in Baustoffen deutlich besser dispergierbar: Bereits nach 70 s Mischzeit ist eine Endfarbstärke von 97% bezogen auf das eingesetzte Pulver erreicht. Allerdings ist das Granulat aus Beispiel 4a für die Herstellung einer Slurry nicht geeignet.

Anders verhalten sich dagegen die Granulate aus den Beispielen 4b und 4c. Bei der Einarbeitung in Baustoffe erreichen sie zwar nach 100 s Mischzeit lediglich 90% beziehungsweise 91% Farbstärke und sind damit mit den beiden Vergleichsproben identisch, allerdings sind die Granulate aus den Beispielen 4b und 4c sehr gut für die Selbstverflüssigung geeignet. Mit dem Granulat aus Beispiel 4b kann eine Suspension mit 60% Feststoffgehalt hergestellt werden, die auch nach einem Tag Lagerung noch problemlos verwendet werden kann, das Granulat aus Beispiel 4c erlaubt sogar einen Feststoffgehalt von 65%.

## VI. Vergleichsbeispiel 5

Zur Herstellung einer Eisenoxidorange-Mischung werden Bayferrox® 920 und Bayferrox® 110 im Gewichtsverhältnis 3 : 2 in einem Mischer gemischt. Zu dieser Mischung werden 1,5% einer 45%igen wäßrigen Lösung von Polyethylenglykol (mittleres Molekulargewicht circa 4000) in einem Mischer zugesetzt und weitere 15 Minuten gemischt. Die Mischung wurde auf einem Kompaktierer 200/50 mit circa 16 kN (3 kN/cm) gepresst und danach auf einem Schroter mit einem Sieb von 1,5 mm Maschenweite zerkleinert. Das zerkleinerte Produkt wurde in 1,0 kg-Portionen in einen Granulierteller mit 70 cm Durchmesser und 53° Neigung eingefüllt und bei circa 35 UpM so lange nachgerollt, bis der Feinanteil vollständig aufgranuliert war.

Für die Abtestung in den verschiedenen Medien wurde wieder die Fraktion 315 $\mu$m bis 1250 $\mu$m eingesetzt, um stets gleiche Teilchengrößen miteinander zu vergleichen (Vergleichsbeispiel 5).

Die oben beschriebene Orange-Ausgangsmischung vor Zugabe der Polyethylenglykol-Lösung diente bei der Untersuchung der Dispergierbarkeit in Baustoffen als Bezug für die Farbstärke. Die Untersuchungsergebnisse des Granulates aus Vergleichsbeispiel 5 sind in Tabelle 2 zusammengefasst.

## VII. Beispiel 6

Zu 20 kg Eisenoxidgelb Bayferrox® 920 aus Beispiel 5 wurden 1,5% einer 45%igen wäßrigen Lösung von Polyethylenglykol (mittleres Molekulargewicht circa 4000) in einem Mischer zugesetzt und 15 Minuten gemischt. Die Mischung wurde auf einem Kompaktierer 200/50 (Fa. Bepex, Leingarten) mit circa 16 kN (3 kN/cm) gepresst und danach auf einem Schroter (Fa. Frewitt, Fribourg, Schweiz) mit einem Sieb von 1,5 mm Maschenweite zerkleinert. Das zerkleinerte Produkt wurde über ein Sieb mit 250 $\mu$m Maschenweite abgesiebt.

Das im Beispiel 5 eingesetzte Bayferrox® 110-Pulver wurde in einem Mischer mit folgenden Hilfsmitteln 15 Minuten gemischt:

I. 4,0% einer 25%igen Lösung von Natrium-Caprylat (Lösungsmittel Wasser : Ethanol 1 : 1)

II. 3,0% einer circa 30%igen wäßrigen Lösung eines Polyacrylates

III. 3,0% einer circa 30%igen wäßrigen Polyethlyenglykol-Lösung (mittleres Molekulargewicht circa 20.000)

Jeweils 0,6 kg des oben genannten kompaktierten, zerkleinerten und abgesiebten Bayferrox® 920-Granulates wurden in einen Granulierteller mit 70 cm Durchmesser und 53° Neigung eingefüllt und bei circa 34 UpM gerollt. Dann wurden jeweils 0,4 kg der

a) oben genannten Mischung I.

b) oben genannten Mischung II.

c) oben genannten Mischung III.

in circa 3 Minuten gleichmäßig in den rotierenden Granulierteller gegeben, indem das Pulver durch ein Sieb mit 0,5 mm Maschenweite gedrückt wurde (Beispiel 6a bis 6c).

Für die Abtestung in den verschiedenen Medien wurde jeweils die Fraktion 315 $\mu$m bis 1250 $\mu$m eingesetzt.

Die Untersuchungsergebnisse der Granulate aus den Beispielen 6a bis 6c sind in Tabelle 2 zusammengefasst.

Die Granulate aus Vergleichsbeispiel 5 sind in Baustoffen nicht befriedigend gut dispergierbar.

Auch nach 100 s Mischzeit ergibt sich eine Farbstärke von lediglich 80%, bezogen auf die eingesetzte Orange-Ausgangsmischung. Die Granulate aus den Beispielen 6a bis 6c zeigen dagegen eine deutlich verbesserte Dispergierbarkeit.

**VIII. Beispiel 7**

In einem Mischer wurden die folgenden Pulver-Mischungen hergestellt:

I. das im Beispiel 6 für die Herstellung des gepressten Kerns verwendeten Bayferrox® 920-Pulvers mit 3,0% einer circa 35%igen wässrigen Lösung eines Polycarboxylatethers

II. eine 9 : 1-Mischung des im Beispiel 6 für die Herstellung des gepressten Kerns verwendeten Bayferrox® 920-Pulvers und ein Phthalocyaninblau-Pigment (Bayplast® Blue, Handelsprodukt der Lanxess Deutschland GmbH) mit 3,0% einer 45%igen wäßrigen Polyethlyenglykol-Lösung (mittleres Molekulargewicht circa 4000).

Die jeweils unten angegebene Menge des im Beispiel 6 beschriebenen kompaktierten, zerkleinerten und abgesiebten Bayferrox® 920-Granulates wurde in einen Granulierteller mit 70 cm Durchmesser und 53° Neigung eingefüllt und bei circa 34 UpM gerollt. Dann wurde jeweils die unten abgegebene Menge der oben genannten Mischung I. beziehungsweise II. in circa 3 Minuten gleichmäßig in den rotierenden Granulierteller gegeben, indem das Pulver beziehungsweise die Pulvermischungen durch ein Sieb mit 0,5 mm Maschenweite gedrückt wurde.

a) 0,6 kg des kompaktierten, zerkleinerten und abgesiebten Bayferrox® 920-Granulates und 0,4 kg der Mischung I.

b) 0,8 kg des kompaktierten, zerkleinerten und abgesiebten Bayferrox® 920-Granulates und 0,2 kg der Mischung II.

c) 0,6 kg des kompaktierten, zerkleinerten und abgesiebten Bayferrox® 920-Granulates und 0,4 kg der Mischung II.

Für die Abtestung in den verschiedenen Medien wurde jeweils die Fraktion 315 $\mu$m bis 1250 $\mu$m eingesetzt.
Die Untersuchungsergebnisse der Granulate aus den Beispielen 7a bis 7c sind in Tabelle 3 zusammengefasst.

**Tabelle 1**

| | Rest-feuchte [%] | Au-slaufzeit [s] | Dispergierbarkeit in Baust-off | | Dispergier-barkeit in As-phalt | Dispergier-barkeit in Disper-sionsfarbe | Dispergierbarkeit in Kun-ststoff | | Selbstverflüssigung | | |
|---|---|---|---|---|---|---|---|---|---|---|---|
| | | | Farbstärke [%] / Mischzeit [s]; Bezug: Aus-gangspulver | Farbabstand $\Delta E_{ab}$*; Bezug: Ausgangspul-ver | $\Delta a$*-Wert; Bez-ug: Ausgang-spulver | 150 μm Nassfilms-chichtdicke | Dispergierhärt e $HD_{PVC-P}$ [%] | Farbab-stand $\Delta E_{ab}$*; Bezug: kalt-gewalztes PVC-Fell | Feststoffge-halt [%] | Viskosität nach Her-stellung [mPas] | Visko-sität nach einem Tag [mPas] |
| Vergleichsbeis piel 1 | 0,9 | 37 | 96 / 85 | 0,6 | 0,0 | 5 / 4 / 1-2 | n. b. | n. b. | 55 | 840 | 820 |
| Beispiel 2a | 0,7 | 32 | 94 / 85 | 0,7 | -0,4 | 5 / 3-4 / 1 | n. b. | n. b. | 55 | 460 | 420 |
| Beispiel 2b | 0,4 | 31 | 99 / 55 | 0,9 | 0,0 | 5 / 3-4 / 1 | n. b. | n. b. | 55 | 640 | 600 |
| Beispiel 2c | 0,6 | 29 | 97 / 55 | 0,7 | -0,1 | 5 / 4 / 1 | n. b. | n. b. | 60 | 960 | 840 |
| Beispiel 2d | 0,4 | 29 | 97 / 55 | 0,6 | 0,0 | 5 / 4 / 1 | n. b. | n. b. | 70 | 300 | 300 |
| Vergleichsbeis piel 3a | 0,2 | 35 | 91 / 100 | 1,2 | n. b. | n. b. | 5 | 0,9 | 60 | 380 | 1720 |
| Vergleichsbeis piel 3b | n. b. | n. b. | 88 / 100 | 2,1 | n. b. | n. b. | n. b. | n. b. | n. b. | n. b. | n. b. |
| Beispiel 4a | 1,3 | 28 | 97 / 70 | 1,2 | n. b. | n. b. | 7 | 1,1 | 60 | 940 | > 2000 |
| Beispiel 4b | 0,3 | 27 | 90 / 100 | 1,2 | n. b. | n. b. | 4 | 0,7 | 60 | 340 | 880 |
| Beispiel 4c | 0,4 | 29 | 91 / 100 | 1,1 | n. b. | n. b. | 7 | 1,0 | 65 | 800 | 620 |

**Tabelle 2**

| | Restfeuchte [%] | Auslaufzeit [s] | Dispergierbarkeit in Baustoff | |
| --- | --- | --- | --- | --- |
| | | | Farbstärke [%] / Mischzeit [s]; Bezug: Ausgangs-mischung | Farbabstand $\Delta E_{ab}$*; Bezug: Ausgangspulver |
| Vergleichsbeispiel 5 | n. b. | 44 | 80 / 100 | 3,2 |
| Beispiel 6a | 0,1 | 44 | 96 / 85 | 1,0 |
| Beispiel 6b | 0,1 | 36 | 97 / 70 | 0,9 |
| Beispiel 6c | 0,1 | 39 | 99 / 85 | 1,0 |

**Tabelle 3**

| | Restfeuchte [%] | Auslaufzeit [s] | Dispergierbarkeit in Kunststoff | | Selbstverflüssigung | | |
|---|---|---|---|---|---|---|---|
| | | | Dispergierhärte $HD_{PVC-P}$ [%] | $\Delta E_{ab}$*; Bezug: kaltgewalztes PVC-Fell | Feststoffgehalt [%] | Viskosität nach Herstellung [mPas] | Viskosität nach einem Tag [mPas] |
| Beispiel 7a | 1,3 | 42 | n. b. | n. b. | 30 | 870 | 840 |
| Beispiel 7b | 0,9 | 42 | 2 | 0,5 | n. b. | n. b. | n. b. |
| Beispiel 7c | 0,9 | 36 | 3 | 0,7 | n. b. | n. b. | n. b. |
| "n.b." in Tabellen 1 bis 3 bedeutet "nicht bestimmt". | | | | | | | |

Fig. 1 zeigt eine lichtmikroskopische Aufnahme eines Eisenoxid-Orangegranulates, bei dem ein kompaktiertes Eisenoxidgelbpigment als Kern-Fraktion (als "A" in Fig. 1 bezeichnet) dient, auf die ein Eisenoxidrotpigment (als "B" in Fig. 1 bezeichnet) als äußere Schicht aufgranuliert wurde. Die Granulatteilchen sind in ein Harz eingegossen und angeschliffen.

## Patentansprüche

1. Pigmentgranulate zur Einfärbung von Baustoffen, **dadurch gekennzeichnet, dass** sie aus einem gepressten oder brikettierten Kern und mindestens einer aufgranulierten äußeren Schicht bestehen, wobei

a) der Kern mindestens ein organisches Pigment, ausgewählt aus der Grupp Azo-, Chinacridon-, Phthalocyanin- und Perylen-Pigmente und Indigoide, oder mindestens ein anorganisches Pigment, ausgewählt aus der Gruppe Eisenoxide oder Chromoxide, oder Mischungen davon enthält sowie mindestens ein Hilfsmittel und

b) die aufgranulierte äußere Schicht beziehungsweise die aufgranulierten äußeren Schichten mindestens ein - gegebenenfalls gepresstes oder brikettiertes - organisches Pigment ausgewählt aus der Grupp Azo-, Chinacridon-, Phthalocyanin- und Perylen-Pigmente und Indigoide oder anorganisches Pigment ausgewählt aus der Gruppe Eisenoxide oder Chromoxide oder Mischungen davon enthalten, und die aufgranulierte äußere Schicht beziehungsweise die aufgranulierten äußeren Schichten jeweils mindestens ein Hilfsmittel enthalten und

c) in der aufgranulierten äußeren Schicht beziehungsweise den aufgranulierten äußeren Schichten

1) mindestens ein anderes Hilfsmittel als im gepressten oder brikettierten Kern vorhanden ist oder
2) mindestens ein anderes organisches oder anorganisches Pigment als im gepressten oder brikettierten Kern vorhanden ist und mindestens ein anderes Hilfsmittel als im gepressten oder brikettierten Kern vorhanden ist.

2. Pigmentgranulate, gemäß Anspruch 1, **dadurch gekennzeichnet, dass** als Hilfsmittel Wasser, Salze aus der Gruppe der Phosphate, Phosphonate, Carbonate, Sulfate, Sulfonate, Silikate, Aluminate, Borate, Titanate, Formiate, Oxalate, Zitrate, Tartrate, Stearate, Acetate, Polysaccharide, Cellulosederivate, wie insbesondere Celluloseether oder Celluloseester, Phosphonocarbonsäuren, modifizierte Silane, Silikonöle, Öle aus biologischem Anbau (insbesondere Rapsöl, Sojabohnenöl, Maiskeimöl, Olivenöl, Kokosöl, Sonnenblumenöl), raffinierte Erdöle auf paraffinischer und/oder naphthenischer Basis, synthetisch hergestellte Öle, Alkylphenole, Glykole, Polyether, Polyglykole, Polyglykolderivate, Ethylenoxid-Propylenoxid-Copolymere, Eiweißfettsäurekondensationsprodukte, Alkylbenzolsulfonate, Alkylnaphthalinsulfonate, Ligninsulfonate, sulfatierte Polyglykolether, Melaminformaldehydkondensate, Naphthalinformaldehydkondensate, Gluconsäure, Polyacrylate, Polycarboxylatether, Polyhydroxyverbindungen, Polyhydroxyaminoverbindungen oder Lösungen oder Mischungen oder Suspensionen oder Emulsionen davon eingesetzt werden.

3. Pigmentgranulate gemäß Anspruch 1 oder 2, **dadurch gekennzeichnet, dass** die Pigmentgranulate Hilfsmittel in einer Gesamtmenge von 0,001 bis 10 Gew.-%, insbesondere von 0,1 bis 5 Gew.-%, bezogen auf die Gesamtmenge der Pigmente enthalten.

4. Pigmentgranulate gemäß einem oder mehreren der Ansprüche 1 bis 3, **dadurch gekennzeichnet, dass** mindestens 85 % der Pigmentgranulate eine Teilchengröße im Bereich von 80 bis 3000 $\mu$m, insbesondere im Bereich von 100 bis 1500 $\mu$m, aufweisen.

5. Verfahren zur Herstellung von Pigmentgranulaten gemäß einem oder mehreren der Ansprüche 1 bis 4, **dadurch gekennzeichnet, dass**

a) ein oder mehrere organische oder anorganische Pigmente mit einem oder mehreren Hilfsmitteln vermischt werden,
b) diese Mischung mindestens einem Press- oder Brikettierschritt unterworfen wird, um Schülpen zu erhalten,
c) diese Schülpen in mindestens einem Schritt in Keime und Pulver zerkleinert werden,
dI) die Keime vom Pulver getrennt werden, indem die Fraktion größer 80 $\mu$m, insbesondere größer 100 $\mu$m als Kern-Fraktion dient und gegebenenfalls

(i) einem Rundungsschritt unterworfen wird und/oder
(ii) mit einem oder mehreren Hilfsmitteln beschichtet wird,

wobei Schritt d1)(ii) auch vor d1)(i) stattfinden kann, beziehungsweise beide Schritte auch gleichzeitig stattfinden können und das erhaltene Produkt im Produktionsprozess verbleibt, während die andere Fraktion aus dem Prozess ausgeschleust oder zurückgeführt wird,

e) und auf das erhaltene Produkt unter Zusatz von einem oder mehreren organischen oder anorganischen Pigmenten oder Mischungen davon durch Nachrollen mindestens eine äußere Schicht aufgranuliert wird, wobei

(i) das oder die organischen oder anorganischen Pigmente oder Mischungen zuvor mit einem oder mehreren Hilfsmitteln vermischt wurden, und/oder

(ii) während des Nachrollens ein oder mehrere Hilfsmittel zugesetzt werden und/oder

(iii) das oder die organischen oder anorganischen Pigmente beziehungsweise die Mischung aus organischen oder anorganischen Pigmenten und mindestens einem Hilfsmittel zuvor einem oder mehreren Press- oder Brikettierschritten unterworfen wurde,

um ein nachgerolltes Granulat zu erhalten und

f) das so nachgerollte Granulat gegebenenfalls ein- oder mehrfach mit Hilfsmitteln beschichtet wird.

6.  Verfahren gemäß Anspruch 5, **dadurch gekennzeichnet, dass** der Press- oder Brikettierschritt b) über eine Walzenpresse oder Matrizenpresse und bei Linienkräften von 0,1 bis 50 kN/cm, insbesondere 0,1 bis 20 kN/cm erfolgt.

7.  Verfahren gemäß Anspruch 5, **dadurch gekennzeichnet, dass** im Schritt c) die Zerkleinerung durch ein Passiersieb mit einer Maschenweite von 0,5 bis 4 mm, insbesondere von 1 bis 2 mm, als Zerkleinerungsaggregat erfolgt.

8.  Verfahren gemäß Anspruch 5, **dadurch gekennzeichnet, dass** vor der Zerkleinerung im Schritt c) die Schülpen aus b) in zwei Fraktionen aufgetrennt werden, die grobe Fraktion, in der mindestens 85 % der Teilchen größer 500 $\mu$m, insbesondere größer 600 $\mu$m sind, dem Schritt c) zugeführt und in einem oder mehreren Schritten zerkleinert wird und die feine Fraktion in den Schritt d1) gegeben wird, um im Schritt d1) getrennt von oder zusammen mit den Keimen und dem Pulver aus Schritt c) abermals in zwei oder mehrere Fraktionen aufgetrennt zu werden und die Kern-Fraktion zu bilden.

9.  Verfahren gemäß Anspruch 5, **dadurch gekennzeichnet, dass** die Keime und Pulver des zerkleinerten Produktes aus Schritt c) in Schritt d1) in zwei Fraktionen aufgetrennt werden, wobei der Feinanteil kleiner 80 $\mu$m, insbesondere kleiner 250 $\mu$m, ausgeschleust oder in den Prozeß zurückgeführt wird und die grobe Fraktion größer 80 $\mu$m, insbesondere größer 250 $\mu$m, als Kern-Fraktion dient.

10. Verfahren gemäß Anspruch 5, **dadurch gekennzeichnet, dass** die Keime und Pulver des zerkleinerten Produktes aus Schritt c) in Schritt d1) in drei Fraktionen aufgetrennt wird, wobei der Feinanteil und der Grobanteil ausgeschleust oder zurückgeführt werden und die mittlere Fraktion im Bereich von 80 bis 2 000 $\mu$m, insbesondere von 250 bis 1000 $\mu$m als Kern-Fraktion dient.

11. Verfahren gemäß Anspruch 5, **dadurch gekennzeichnet, dass** vor dem Schritt e) die Kern-Fraktion aus Schritt d1) in zwei Fraktionen aufgetrennt wird, wobei der Feinanteil oder der Grobanteil ausgeschleust oder zurückgeführt werden und die Fraktion im Bereich von 80 bis 2000 $\mu$m, insbesondere im Bereich von 100 bis 1500 $\mu$m, dem Schritt e) zugeführt wird.

12. Verwendung der Pigmentgranulate gemäß der Ansprüche 1 bis 4 zur Einfärbung von Baustoffen, wie Beton, Zementmörtel, Putze und Asphalt, und zur Einfärbung von organischen Medien, wie Lacken, Kunststoffen und Farbpasten, und zur Herstellung von Dispersionsfarben und Slurries.

**Claims**

1.  Pigment granules for colouring building materials, **characterized in that** they consist of a pressed or briquetted core and at least one outer layer applied by granulation,

a) the core containing at least one organic pigment selected from the group of azo, quinacridone, phthalocyanine and perylene pigments and indigoids, or at least one inorganic pigment selected from the group of iron oxides or chromium oxides or mixtures thereof and at least one auxiliary and

b) the outer layer applied by granulation or the outer layers applied by granulation containing at least one - optionally pressed or briquetted - organic pigment selected from the group of azo, quinacridone, phthalocyanine and perylene pigments and indigoids, or inorganic pigment selected from the group of iron oxides or chromium oxides or mixtures thereof and the outer layer applied by granulation or the outer layers applied by granulation containing in each case at least one auxiliary and

c) in the outer layer applied by granulation or the outer layers applied by granulation,

1) at least one auxiliary other than that in the pressed or briquetted core being present or

2) at least one organic or inorganic pigment other than that in the pressed or briquetted core being present and at least one auxiliary other than that in the pressed or briquetted core being present.

2. Pigment granules according to Claim 1, **characterized in that** water, salts from the group consisting of the phosphates, phosphonates, carbonates, sulphates, sulphonates, silicates, aluminates, borates, titanates, formates, oxalates, citrates, tartrates, stearates, acetates, polysaccharides, cellulose derivatives, such as, in particular cellulose ethers or cellulose esters, phosphonocarboxylic acids, modified silanes, silicone oils, oils from biological cultivation (in particular rapeseed oil, soybean oil, maize oil, olive oil, coconut oil, sunflower oil), refined paraffinic and/or naphthenic mineral oils, synthetically prepared oils, alkylphenols, glycols, polyethers, polyglycols, polyglycol derivatives, ethylene oxide-propylene oxide copolymers, protein/fatty acid condensates, alkyl benzenesulphonates, alkyl naphthalenesulphonates, ligninsulphonates, sulphated polyglycol ethers, melamine/formaldehyde condensates, naphthalene/- formaldehyde condensates, gluconic acid, polyacrylates, polycarboxylate ethers, polyhydroxy compounds, polyhydroxyamino compounds or solutions or mixtures or suspensions or emulsion thereof are used as auxiliaries.

3. Pigment granules according to Claim 1 or 2, **characterized in that** the pigment granules contain auxiliaries in a total amount of 0.001 to 10% by weight, in particular of 0.1 to 5% by weight, based on the total amount of the pigments.

4. Pigment granules according to one or more of Claims 1 to 3, **characterized in that** at least 85% of the pigment granules have a particle size in the range of 80 to 3000 $\mu$m, in particular in the range of 100 to 1500 $\mu$m.

5. Process for the preparation of pigment granules according to one or more of Claims 1 to 4, **characterized in that**

a) one or more organic or inorganic pigments are mixed with one or more auxiliaries,

b) this mixture is subjected to at least one pressing or briquetting step in order to obtain scabs,

c) these scabs are comminuted in at least one step to give nuclei and powder,

d1) the nuclei are separated from the powder **in that** the fraction greater than 80 $\mu$m, in particular greater than 100 $\mu$m, serves as a core fraction and optionally

(i) is subjected to a rounding step and/or

(ii) is coated with one or more auxiliaries,

it being possible for step d1)(ii) also to take place before d1)(i) or it being possible for both steps to take place simultaneously, and the product obtained remaining in the production process while the other fraction is removed from the process or recycled,

e) and at least one outer layer being applied by granulation by subsequent rolling to the product obtained with addition of one or more organic or inorganic pigments or mixtures thereof,

(i) the organic or inorganic pigment or pigments or mixtures having been mixed beforehand with one or more auxiliaries and/or

(ii) one or more auxiliaries being added during the subsequent rolling and/or

(iii) the organic or inorganic pigment or pigments or the mixture of organic or inorganic pigments and at least one auxiliary having been subjected beforehand to one or more pressing or briquetting steps,

in order to obtain subsequently rolled granules and

f) the granules subsequently rolled in this manner are optionally coated once or several times with auxiliaries.

6. Process according to Claim 5, **characterized in that** the pressing or briquetting step b) is effected by means of a roll press or matrix press and at nip forces of 0.1 to 50 kN/cm, in particular 0.1 to 20 kN/cm.

7. Process according to Claim 5, **characterized in that**, in step c), the comminution is effected by means of a sieve having a mesh size of 0.5 to 4 mm, in particular of 1 to 2 mm, as a comminuting unit.

8. Process according to Claim 5, **characterized in that**, before the comminution in step c), the scabs from b) are separated into two fractions, the coarse fraction, in which at least 85% of the particles are greater than 500 $\mu$m, in particular greater than 600 $\mu$m, is fed to step c) and comminuted in one or more steps and the fine fraction is fed to step d1) in order to be separated again into two or more fractions in step d1), separately from or together with the nuclei and the powder from c), and to form the core fraction.

9. Process according to Claim 5, **characterized in that** the nuclei and powder of the comminuted product from step c) are separated into two fractions in step d1), the fine fraction smaller than 80 $\mu$m, in particular smaller than 250 $\mu$m, being removed or recycled to the process and the coarse fraction greater than 80 $\mu$m, in particular greater than 250 $\mu$m, serving as a core fraction.

10. Process according to Claim 5, **characterized in that** the nuclei and powder of the comminuted product from c) are separated into three fractions in step d1), the fine fraction and the coarse fraction being removed or recycled and the medium fraction in the range of 80 to 2000 $\mu$m, in particular of 250 to 1000 $\mu$m, serving as a core fraction.

11. Process according to Claim 5, **characterized in that**, before step e), the core fraction from step d1) is separated into two fractions, the fine fraction or the coarse fraction being removed or recycled and the fraction in the range of 80 to 2000 $\mu$m, in particular in the range of 100 to 1500 $\mu$m, being fed to step e).

12. Use of the pigment granules according to Claims 1 to 4 for colouring building materials such as concrete, cement mortar, renders and asphalt, and for colouring organic media, such as finishes, plastics and colour pastes, and for the preparation of emulsion paints and slurries.

## Revendications

1. Pigments granulés pour la coloration de matériaux de construction, **caractérisés en ce qu'**ils sont constitués par un noyau comprimé ou briqueté et au moins une couche extérieure granulée,

    a) le noyau contenant au moins un pigment organique, choisi dans le groupe constitué par les pigments azo, quinacridone, phtalocyanine et pérylène et les indigoïdes, ou au moins un pigment inorganique, choisi dans le groupe constitué par les oxydes de fer ou les oxydes de chrome ou leurs mélanges, ainsi qu'au moins un adjuvant, et
    b) la couche extérieure granulée ou les couches extérieures granulées contenant au moins un pigment organique, éventuellement comprimé ou briqueté, choisi dans le groupe constitué par les pigments azo, quinacridone, phtalocyanine et pérylène et les indigoïdes, ou un pigment inorganique, choisi dans le groupe constitué par les oxydes de fer ou les oxydes de chrome ou leurs mélanges, et la couche extérieure granulée ou les couches extérieures granulées contenant chacune au moins un adjuvant, et
    c) dans la couche extérieure granulée ou les couches extérieures granulées,

        1) au moins un autre adjuvant que dans le noyau comprimé ou briqueté étant présent, ou
        2) au moins un autre pigment organique ou inorganique que dans le noyau comprimé ou briqueté étant présent, et au moins un autre adjuvant que dans le noyau comprimé ou briqueté étant présent.

2. Pigments granulés selon la revendication 1, **caractérisés en ce que** de l'eau, des sels du groupe constitué par les phosphates, les phosphonates, les carbonates, les sulfates, les sulfonates, les silicates, les aluminates, les borates, les titanates, les formiates, les oxalates, les citrates, les tartrates, les stéarates, les acétates, les polysaccharides, les dérivés de cellulose, tels que notamment les éthers de cellulose ou les esters de cellulose, les acides phosphono-carboxyliques, les silanes modifiés, les huiles de silicone, les huiles issues de l'agriculture biologique (notamment l'huile de colza, l'huile de soja, l'huile de maïs, l'huile d'olive, l'huile de coco, l'huile de tournesol), les pétroles raffinés à base paraffinique et/ou naphténique, les huiles synthétiques, les alkylphénols, les glycols, les polyéthers, les polyglycols, les dérivés de polyglycol, les copolymères d'oxyde d'éthylène-oxyde de propylène, les produits de condensation d'acides gras d'albumen, les sulfonates d'alkylbenzène, les sulfonates d'alkylnaphtaline, les sulfonates de lignine, les éthers de polyglycol sulfatés, les condensats de mélamine-formaldéhyde, les condensats de naphtaline-formaldéhyde, l'acide gluconique, les polyacrylates, les éthers de polycarboxylate, les composés polyhydroxy, les composés polyhydroxyamino ou des solutions ou des mélanges ou des suspensions ou des émulsions de ceux-ci sont utilisés en tant qu'adjuvant.

3. Pigments granulés selon la revendication 1 ou 2, **caractérisés en ce que** les pigments granulés contiennent des adjuvants en une quantité totale de 0,001 à 10 % en poids, notamment de 0,1 à 5 % en poids, par rapport à la quantité totale des pigments.

4. Pigments granulés selon une ou plusieurs des revendications 1 à 3, **caractérisés en ce qu'**au moins 85 % des pigments granulés présentent une taille de particule dans la plage allant de 80 à 3 000 $\mu$m, notamment dans la plage allant de 100 à 1 500 $\mu$m.

5. Procédé de fabrication de pigments granulés selon une ou plusieurs des revendications 1 à 4, **caractérisé en ce que**

a) un ou plusieurs pigments organiques ou inorganiques sont mélangés avec un ou plusieurs adjuvants,
b) ce mélange est soumis à au moins une étape de compression ou de briquetage pour obtenir des flocons,
c) ces flocons sont broyés en au moins une étape en germes et poudre,
d1) les germes sont séparés de la poudre, la fraction supérieure à 80 $\mu$m, notamment supérieure à 100 $\mu$m, servant de fraction de noyau, et éventuellement

(i) étant soumise à une étape d'arrondissement et/ou
(ii) étant revêtue avec un ou plusieurs adjuvants,

l'étape d1)(ii) pouvant également avoir lieu avant d1)(i), ou les deux étapes pouvant également avoir lieu simultanément, et le produit obtenu restant dans le procédé de production, tandis que l'autre fraction est déchargée du procédé ou recyclée,
e) et au moins une couche extérieure est granulée sur le produit obtenu avec ajout d'un ou de plusieurs pigments organiques ou inorganiques ou de mélanges de ceux-ci par calandrage,

(i) le ou les pigments organiques ou inorganiques ou les mélanges ayant auparavant été mélangés avec un ou plusieurs adjuvants, et/ou
(ii) un ou plusieurs adjuvants étant ajoutés pendant le calandrage, et/ou
(iii) le ou les pigments organiques ou inorganiques ou le mélange de pigments organiques ou inorganiques et d'au moins un adjuvant ayant auparavant été soumis à une ou plusieurs étapes de compression ou de briquetage,

afin d'obtenir un granulat calandré, et
f) le granulat ainsi calandré est éventuellement revêtu une ou plusieurs fois avec des adjuvants.

6. Procédé selon la revendication 5, **caractérisé en ce que** l'étape de compression ou de briquetage b) a lieu par une presse à cylindre ou une presse à matrice et à des forces linéaires de 0,1 à 50 kN/cm, notamment de 0,1 à 20 kN/cm.

7. Procédé selon la revendication 5, **caractérisé en ce qu'**à l'étape c), le broyage a lieu au travers d'un tamis ayant une largeur de mailles de 0,5 à 4 mm, notamment de 1 à 2 mm, en tant qu'appareil de broyage.

8. Procédé selon la revendication 5, **caractérisé en ce qu'**avant le broyage à l'étape c), les flocons de b) sont séparés en deux fractions, la fraction grossière dans laquelle au moins 85 % des particules sont supérieures à 500 $\mu$m, notamment supérieures à 600 $\mu$m, étant introduite dans l'étape c) et broyée en une ou plusieurs étapes, et la fraction fine étant introduite dans l'étape d1), afin d'être de nouveau séparée à l'étape d1) en deux fractions ou plus séparément ou conjointement avec les germes et la poudre de l'étape c) et de former la fraction de noyau.

9. Procédé selon la revendication 5, **caractérisé en ce que** les germes et la poudre du produit broyé de l'étape c) sont séparés en deux fractions à l'étape d1), la fraction fine inférieure à 80 $\mu$m, notamment inférieure à 250 $\mu$m, étant déchargée ou recyclée dans le procédé, et la fraction grossière supérieure à 80 $\mu$m, notamment supérieure à 250 $\mu$m, servant de fraction de noyau.

10. Procédé selon la revendication 5, **caractérisé en ce que** les germes et la poudre du produit broyé de l'étape c) sont séparés en trois fractions à l'étape d1), la fraction fine et la fraction grossière étant déchargées ou recyclée, et la fraction moyenne dans la plage allant de 80 à 2 000 $\mu$m, notamment de 250 à 1 000 $\mu$m, servant de fraction de noyau.

**11.** Procédé selon la revendication 5, **caractérisé en ce qu'**avant l'étape e), la fraction de noyau de l'étape d1) est séparée en deux fractions, la fraction fine ou la fraction grossière étant déchargée ou recyclée, et la fraction dans la plage allant de 80 à 2 000 $\mu$m, notamment dans la plage allant de 100 à 1 500 $\mu$m, étant introduite dans l'étape e).

**12.** Utilisation des pigments granulés selon les revendications 1 à 4 pour la coloration de matériaux de construction, tels que le béton, le mortier de ciment, l'enduit et l'asphalte, et pour la coloration de matériaux organiques, tels que des vernis, des plastiques et des pâtes colorées, et pour la fabrication de peintures en dispersion et de suspensions.

*Fig.1*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3619363 A1
- EP 0268645 A1
- EP 0365046 A1
- DE 3918694 A1
- US 5215583 A1
- EP 0507046 A1
- EP 0257423 A1
- DE 3841848 A1
- EP 0424896 A1

- DE 3132303 A1
- EP 0144940 A1
- DE 2844710 A1
- DE 4214195 A1
- DE 19638042 A1
- DE 19649756 A1
- EP 1074599 A1
- DE 4336613 A1
- DE 4336612 A1

**In der Beschreibung aufgeführte Nicht-Patentliteratur**

- The Shell Bitumen Handbook. 1990, 230-232